(19) **Europäisches Patentamt / European Patent Office / Office européen des brevets**

(11) **EP 4 657 641 A1**

(12) **EUROPEAN PATENT APPLICATION**
published in accordance with Art. 153(4) EPC

(43) Date of publication:
**03.12.2025 Bulletin 2025/49**

(21) Application number: **24747313.5**

(22) Date of filing: **23.01.2024**

(51) International Patent Classification (IPC):
$H01M\ 50/443^{(2021.01)}$    $H01G\ 11/52^{(2013.01)}$
$H01M\ 4/02^{(2006.01)}$    $H01M\ 4/13^{(2010.01)}$
$H01M\ 50/42^{(2021.01)}$    $H01M\ 50/449^{(2021.01)}$

(52) Cooperative Patent Classification (CPC):
**H01G 11/52; H01M 4/02; H01M 4/13; H01M 50/42;
H01M 50/443; H01M 50/449; Y02E 60/10**

(86) International application number:
**PCT/JP2024/001908**

(87) International publication number:
**WO 2024/157986 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.01.2023 JP 2023008384**

(71) Applicant: **Zeon Corporation
Tokyo 100-8246 (JP)**

(72) Inventor: **ADACHI, Yusuke
Tokyo 100-8246 (JP)**

(74) Representative: **Maiwald GmbH
Elisenhof
Elisenstraße 3
80335 München (DE)**

(54) **COMPOSITION FOR ELECTROCHEMICAL ELEMENT FUNCTIONAL LAYERS, FUNCTIONAL LAYER FOR ELECTROCHEMICAL ELEMENTS, MULTILAYER BODY FOR ELECTROCHEMICAL ELEMENTS, AND ELECTROCHEMICAL ELEMENT**

(57) A composition for a functional layer contains a particulate polymer having a core-shell structure. In this particulate polymer, coverage of an outer surface of the core portion by the shell portion is not less than 1% and not more than 90%, and a polymer A of the core portion has a degree of swelling in electrolyte solution of not less than $\times 0.1$ and less than $\times 5$, includes an unsaturated carboxylic acid ester monomer unit having a carbon number of 6 or less, and has a volume-average particle diameter of not less than 0.1 $\mu$m and not more than 10 $\mu$m.

EP 4 657 641 A1

**Description**

TECHNICAL FIELD

The present disclosure relates to a composition for an electrochemical device functional layer, a functional layer for an electrochemical device, a laminate for an electrochemical device, and an electrochemical device.

BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications. An electrochemical device generally includes constituent members such as a positive electrode, a negative electrode, and a separator that isolates the positive electrode and the negative electrode from each other and prevents short-circuiting between the positive and negative electrodes.

Constituent members that include a porous membrane layer for improving heat resistance and strength, an adhesive layer for adhering battery members to each other, or the like (hereinafter, these layers are referred to using the general term "functional layer") are used in electrochemical devices such as lithium ion secondary batteries. Specifically, electrodes that further include a functional layer formed on an electrode substrate in which an electrode mixed material layer is provided on a current collector and separators that include a functional layer formed on a separator substrate are used as battery members. Moreover, the further improvement of functional layers has been studied in recent years with the aim of further raising the performance of electrochemical devices such as lithium ion secondary batteries.

As one example, Patent Literature (PTL) 1 discloses a composition for a non-aqueous secondary battery functional layer containing a particulate polymer having a core-shell structure in which a polymer of a core portion and a polymer of a shell portion each have a specific glass-transition temperature and a specific degree of swelling in electrolyte solution. According to PTL 1, a functional layer that is formed using this composition for a non-aqueous secondary battery functional layer can provide a battery member with high blocking resistance and can display excellent adhesiveness both before and after immersion in electrolyte solution.

CITATION LIST

Patent Literature

PTL 1: JP6504168B2

SUMMARY

(Technical Problem)

It is preferable that a functional layer has high adhesive strength even after immersion in electrolyte solution. It is also preferable that an electrochemical device including a functional layer has low resistance from a viewpoint of enhancing electrochemical characteristics.

However, a functional layer formed using a composition for a functional layer according to the conventional technique described above leaves room for improvement in terms of achieving a good balance of high adhesive strength after immersion in electrolyte solution and low resistance of an electrochemical device including the functional layer.

Accordingly, one object of the present disclosure is to provide a composition for an electrochemical device functional layer with which it is possible to form a functional layer for an electrochemical device that enables a good balance of high adhesive strength after immersion in electrolyte solution and low resistance of an electrochemical device.

Another object of the present disclosure is to provide a functional layer for an electrochemical device that enables a good balance of high adhesive strength after immersion in electrolyte solution and low resistance of an electrochemical device.

Another object of the present disclosure is to provide a laminate for an electrochemical device that can reduce resistance of an electrochemical device.

Another object of the present disclosure is to provide an electrochemical device that has low resistance and excellent electrochemical characteristics such as cycle characteristics.

(Solution to Problem)

The inventor conducted diligent investigation with the aim of solving the problem set forth above. The inventor made a new discovery that by using a composition that contains a particulate polymer having a specific core-shell structure and properties, a functional layer having high adhesive strength even after immersion in electrolyte solution is obtained, and an electrochemical device including this functional layer has low resistance and displays excellent electrochemical characteristics. In this manner, the inventor completed the present disclosure.

Specifically, with the aim of advantageously solving the problem set forth above, [1] a presently disclosed composition for an electrochemical device functional layer comprises a particulate polymer, wherein the particulate polymer has a core-shell structure including a core portion and a shell portion partially covering an outer surface of the core portion, coverage of the outer surface of the core portion by the shell portion is not less than 1% and not more than 90%, and a polymer A of the core portion has a degree of swelling in electrolyte solution of not less than $\times 0.1$ and less than $\times 5$, includes an unsaturated carboxylic acid ester monomer unit having a carbon number of 6 or less, and has a volume-average particle diameter D50 of not less than 0.1 $\mu$m and not more than 10 $\mu$m.

By using a composition for an electrochemical device functional layer that contains a particulate polymer having the specific core-shell structure and properties set forth above in this manner, it is possible to form a functional layer for an electrochemical device that enables a good balance of high adhesive strength after immersion in electrolyte solution and low resistance of an electrochemical device.

Note that the "coverage of an outer surface of a core portion by a shell portion", "degree of swelling in electrolyte solution", and "volume-average particle diameter" referred to in the present disclosure can be measured by methods described in the EXAMPLES section of the present specification.

Moreover, when a polymer is said to "include a monomer unit" in the present disclosure, this means that "a polymer obtained with the monomer includes a structural unit derived from the monomer". Furthermore, the "proportional content (mass%)" of each monomer unit (each repeating unit) included in a polymer referred to in the present disclosure can be measured by a nuclear magnetic resonance (NMR) method such as $^1$H-NMR or $^{13}$C-NMR.

[2] In the composition for an electrochemical device functional layer according to the foregoing [1], the particulate polymer preferably has a volume-average particle diameter D50 of not less than 1.0 $\mu$m and not more than 12 $\mu$m.

When the volume-average particle diameter D50 of the particulate polymer is 1.0 $\mu$m or more in this manner, adhesive strength of a functional layer after immersion in electrolyte solution can be further improved because sufficient deformability of the particulate polymer can be ensured during hot pressing or the like in production of an electrochemical device. Moreover, when the volume-average particle diameter D50 of the particulate polymer is 12 $\mu$m or less, resistance of an electrochemical device can be further reduced and electrochemical characteristics such as cycle characteristics of the electrochemical device can be further improved because reduction of electrolyte solution impregnation is suppressed.

Note that the volume-average particle diameter D50 of a particulate polymer referred to in the present disclosure can be measured by a method described in the EXAMPLES section of the present specification.

[3] In the composition for an electrochemical device functional layer according to the foregoing [1] or [2], the polymer A of the core portion preferably includes a cross-linkable monomer unit in a proportion of not less than 0.1 mass% and not more than 75 mass%.

When a cross-linkable monomer unit included in the polymer A of the core portion is 0.1 mass% or more in this manner, sticking together of adjacent electrochemical device members via a functional layer in a production process of an electrochemical device can be inhibited (i.e., blocking resistance of a functional layer can be increased). Moreover, when the proportion constituted by a cross-linkable monomer unit included in the polymer A of the core portion is 75 mass% or less, adhesive strength of a functional layer after immersion in electrolyte solution can be further improved.

[4] In the composition for an electrochemical device functional layer according to any one of the foregoing [1] to [3], a polymer B of the shell portion preferably includes a cross-linkable monomer unit in a proportion of not less than 0.1 mass% and not more than 75 mass%.

When the proportion constituted by a cross-linkable monomer unit included in the polymer B of the shell portion is 0.1 mass% or more in this manner, blocking resistance can be further improved. Moreover, when the proportion constituted by a cross-linkable monomer unit included in the polymer B of the shell portion is 75 mass% or less, adhesive strength of a functional layer after immersion in electrolyte solution can be further improved.

Moreover, with the aim of advantageously solving the problem set forth above, [5] a presently disclosed functional layer for an electrochemical device is formed using the composition for an electrochemical device functional layer according to any one of the foregoing [1] to [4].

A functional layer for an electrochemical device that has been formed using the composition for an electrochemical device functional layer set forth above enables a good balance of high adhesive strength after immersion in electrolyte solution and low resistance of an electrochemical device including the functional layer for an electrochemical device.

Furthermore, with the aim of advantageously solving the problem set forth above, [6] a presently disclosed laminate for an electrochemical device comprises a substrate and a functional layer on the substrate, wherein the functional layer is the functional layer for an electrochemical device according to the foregoing [5].

A laminate for an electrochemical device that includes the functional layer for an electrochemical device set forth above in this manner can reduce resistance of an electrochemical device.

Also, with the aim of advantageously solving the problem set forth above, [7] a presently disclosed electrochemical device comprises the laminate for an electrochemical device according to the foregoing [6].

An electrochemical device that includes the laminate for an electrochemical device set forth above in this manner has low resistance, and consequently has excellent electrochemical characteristics such as cycle characteristics.

(Advantageous Effect)

According to the present disclosure, it is possible to provide a composition for an electrochemical device functional layer with which it is possible to form a functional layer for an electrochemical device that enables a good balance of high adhesive strength after immersion in electrolyte solution and low resistance of an electrochemical device.

Moreover, according to the present disclosure, it is possible to provide a functional layer for an electrochemical device that enables a good balance of high adhesive strength after immersion in electrolyte solution and low resistance of an electrochemical device.

Furthermore, according to the present disclosure, it is possible to provide a laminate for an electrochemical device that can reduce resistance of an electrochemical device.

Also, according to the present disclosure, it is possible to provide an electrochemical device that has low resistance and excellent electrochemical characteristics such as cycle characteristics.

DETAILED DESCRIPTION

The following provides a detailed description of embodiments of the present disclosure.

The presently disclosed composition for an electrochemical device functional layer (hereinafter, also referred to simply as a "composition for a functional layer") is used as a material in formation of the presently disclosed functional layer for an electrochemical device (hereinafter, also referred to simply as a "functional layer"). Moreover, the presently disclosed functional layer is a layer that is formed using the presently disclosed composition for a functional layer. Furthermore, the presently disclosed laminate for an electrochemical device (hereinafter, also referred to simply as a "laminate") is a laminate that includes the presently disclosed functional layer. Note that although a functional layer that is formed using the presently disclosed composition for a functional layer displays adhesive capability for adhering electrochemical device members to each other, the functional layer may further function as a porous membrane layer for improving heat resistance and strength of an electrochemical device member such as a separator or an electrode. The presently disclosed electrochemical device is an electrochemical device that includes the presently disclosed laminate for an electrochemical device.

(Composition for electrochemical device functional layer)

The presently disclosed composition for an electrochemical device functional layer is a slurry composition that contains at least a particulate polymer, that optionally contains a binder for a functional layer, non-conductive particles (excluding particles corresponding to the particulate polymer and the binder for a functional layer), a water-soluble polymer, and/or other components, and that has water or the like as a dispersion medium.

<Particulate polymer>

The particulate polymer referred to in the present disclosure has a function of causing a functional layer that has been formed using the composition for a functional layer to display excellent adhesiveness.

The particulate polymer has a core-shell structure including a core portion and a shell portion partially covering an outer surface of the core portion, wherein the coverage of the outer surface of the core portion by the shell portion is not less than 1% and not more than 90%. Moreover, a polymer A of the core portion has a degree of swelling in electrolyte solution of not less than ×0.1 and less than ×5, includes an unsaturated carboxylic acid ester monomer unit having a carbon number of 6 or less, and has a volume-average particle diameter D50 of not less than 0.1 μm and not more than 10 μm.

As a result of the presently disclosed composition for a functional layer containing a particulate polymer having the specific structure and properties set forth above, a functional layer that is formed using the composition for a functional layer enables a good balance of high adhesive strength after immersion in electrolyte solution and low resistance of an electrochemical device including the functional layer.

Although it is not clear why excellent effects such as described above are achieved by using the particulate polymer, the reason for these effects is presumed to be as follows.

Specifically, as a result of the coverage of the outer surface of the core portion by the shell portion being not less than 1% and not more than 90%, the polymer of the shell portion becomes interposed between the polymer of the core portion and an electrochemical device member in a situation in which a functional layer that has been formed using the composition for a functional layer is adhered to the electrochemical device member, thus resulting in the formation of a gap. Resistance of the functional layer is presumed to decrease due to ions that contribute to electrochemical reactions such as lithium ions passing through this gap. Moreover, the fact that the polymer A of the core portion has a degree of swelling in electrolyte solution of not less than ×0.1 and less than ×5, the fact that the polymer A of the core portion includes an unsaturated carboxylic acid ester monomer unit having a carbon number of 6 or less, and the fact that the polymer A of the core portion has a volume-average particle diameter of not less than 0.1 $\mu$m and not more than 10 $\mu$m are presumed to have a synergistic effect that results in the polymer A of the core portion displaying high adhesiveness with respect to an electrochemical device member even after immersion in electrolyte solution.

It is presumed that for the reason set forth above, a functional layer obtained using the presently disclosed composition for a functional layer enables a good balance of high adhesive strength after immersion in electrolyte solution and low resistance of an electrochemical device including the functional layer.

[Structure of particulate polymer]

The particulate polymer has a core-shell structure including a core portion and a shell portion partially covering an outer surface of the core portion.

In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion. The particulate polymer may have a particulate form or may have any other form after electrochemical device members have been adhered via a functional layer formed using the composition for a functional layer.

-Coverage of outer surface of core portion by shell portion-

The "coverage of the outer surface of the core portion by the shell portion" referred to in the present disclosure is the average proportion of the surface of the polymer A of the core portion that is covered by a polymer B of the shell portion.

The coverage of the outer surface of the core portion by the shell portion in the particulate polymer is 1% or more, preferably 10% or more, and more preferably 15% or more, and is 90% or less, preferably 80% or less, and more preferably 60% or less. When the coverage of the outer surface of the core portion by the shell portion is not less than any of the lower limits set forth above, blocking resistance of a functional layer can be improved. Moreover, when the coverage of the outer surface of the core portion by the shell portion is not more than any of the upper limits set forth above, adhesive strength of a functional layer after immersion in electrolyte solution can be improved.

-Core portion-

The core portion of the particulate polymer is formed of the polymer A. The polymer A has a degree of swelling in electrolyte solution that is within a specific range, includes an unsaturated carboxylic acid ester monomer unit having a carbon number of 6 or less, and has a volume-average particle diameter D50 that is within a specific range as described in detail below.

=Degree of swelling in electrolyte solution=

The degree of swelling in electrolyte solution of the polymer A is ×0.1 or more, preferably ×0.5 or more, and more preferably ×0.8 or more, and is ×5 or less, preferably ×4.5 or less, and more preferably ×4.0 or less. When the degree of swelling in electrolyte solution of the polymer A is ×0.1 or more, adhesive strength of a functional layer after immersion in electrolyte solution can be further improved because elution of components into electrolyte solution is reduced. Moreover, when the degree of swelling in electrolyte solution of the polymer A is less than ×5, resistance of an electrochemical device including a functional layer can be further reduced, and electrochemical characteristics such as cycle characteristics of the electrochemical device can be further improved.

=Unsaturated carboxylic acid ester monomer unit=

The carbon number of the unsaturated carboxylic acid ester monomer unit that is included in the polymer A is 6 or less, and preferably 5 or less, and is preferably 1 or more, and more preferably 3 or more. When the carbon number of the unsaturated carboxylic acid ester monomer unit included in the polymer A is 6 or less, an increase of polarity of the particulate polymer can be suppressed. Consequently, water absorbency of a coating film of the composition for a functional layer during formation of a functional layer can be reduced, and blocking resistance of the functional layer can be further improved. Moreover, when the carbon number of the unsaturated carboxylic acid ester monomer unit included in the polymer A is 1 or more, residual monomer can be reduced, and an increase of low molecular weight components can be suppressed. This makes it possible to further reduce resistance of an electrochemical device including a functional layer and to further improve electrical characteristics such as cycle characteristics of the electrochemical device.

Examples of unsaturated carboxylic acid ester monomers that can form the unsaturated carboxylic acid ester monomer unit having a carbon number of 6 or less include (meth)acrylic acid ester monomers in which the carbon number of an alkyl group is 6 or less, specific examples of which include methyl acrylate, ethyl acrylate, n-propyl acrylate, isopropyl acrylate, butyl acrylate such as n-butyl acrylate and t-butyl acrylate, pentyl acrylate, hexyl acrylate, and heptyl acrylate. Note that in the present specification, "(meth)acryl" is used to indicate "acryl" or "methacryl".

One unsaturated carboxylic acid ester monomer having a carbon number of 6 or less may be used individually, or two or more unsaturated carboxylic acid ester monomers having a carbon number of 6 or less may be used in combination. Of these unsaturated carboxylic acid ester monomers, n-butyl acrylate, hexyl acrylate, and ethyl acrylate are preferable from a viewpoint of achieving an even better balance of improvement of adhesive strength of a functional layer after immersion in electrolyte solution and reduction of resistance of an electrochemical device, and n-butyl acrylate is more preferable.

The proportion constituted by the unsaturated carboxylic acid ester monomer unit having a carbon number of 6 or less in the polymer A of the core portion when all repeating units in the polymer A are taken to be 100 mass% is preferably 3 mass% or more, more preferably 5 mass% or more, and even more preferably 7 mass% or more, and is preferably 99 mass% or less, more preferably 95 mass% or less, and even more preferably 90 mass% or less. When the proportion constituted by the unsaturated carboxylic acid ester monomer unit having a carbon number of 6 or less in the polymer A of the core portion is within any of the ranges set forth above, adhesive strength of a functional layer after immersion in electrolyte solution can be further improved.

Besides the unsaturated carboxylic acid ester monomer unit having a carbon number of 6 or less described above, the polymer A can optionally include monomer units other than the unsaturated carboxylic acid ester monomer unit having a carbon number of 6 or less, such as a cross-linkable monomer unit, an aromatic vinyl monomer unit, an acidic group-containing monomer unit, and an amide group-containing monomer unit (hereinafter, these monomer units are also referred to as "other monomer units").

=Cross-linkable monomer unit=

The cross-linkable monomer unit is a repeating unit that is derived from a cross-linkable monomer. A cross-linkable monomer is a monomer that can form a cross-linked structure during or after polymerization by heating or by irradiation with energy rays. The inclusion of the cross-linkable monomer unit makes it easier to control the degree of swelling in electrolyte solution of the polymer A of the core portion.

Examples of cross-linkable monomers that can form the cross-linkable monomer unit include cross-linkable monomers including a thermally cross-linkable group and one olefinic double bond per molecule; and cross-linkable monomers including two or more olefinic double bonds per molecule.

Examples of the thermally cross-linkable group include an epoxy group, an N-methylolamide group, an oxetanyl group, an oxazoline group, and combinations thereof. Of these thermally cross-linkable groups, an epoxy group is preferable in terms of ease of cross-linking and cross-link density adjustment.

Examples of cross-linkable monomers that include an epoxy group as a thermally cross-linkable group and also include an olefinic double bond include unsaturated glycidyl ethers such as vinyl glycidyl ether, allyl glycidyl ether, butenyl glycidyl ether, and o-allylphenyl glycidyl ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl 4-heptenoate, glycidyl sorbate, glycidyl linoleate, glycidyl 4-methyl-3-pentenoate, glycidyl ester of 3-cyclohexenecarboxylic acid, and glycidyl ester of 4-methyl-3-cyclohexenecarboxylic acid.

Examples of cross-linkable monomers that include an N-methylolamide group as a thermally cross-linkable group and also include an olefinic double bond include methylol group-containing (meth)acrylamides such as N-methylol (meth)acrylamide.

Examples of cross-linkable monomers that include an oxetanyl group as a thermally cross-linkable group and also include an olefinic double bond include 3-((meth)acryloyloxymethyl)oxetane, 3-((meth)acryloyloxymethyl)-2-trifluoromethyloxetane, 3-((meth)acryloyloxymethyl)-2-phenyloxetane, 2-((meth)acryloyloxymethyl)oxetane, and 2-((meth)acryloyloxymethyl)-4-trifluoromethyloxetane.

Examples of cross-linkable monomers that include an oxazoline group as a thermally cross-linkable group and also include an olefinic double bond include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Examples of cross-linkable monomers including two or more olefinic double bonds per molecule include butadiene, isoprene, allyl (meth)acrylate, ethylene glycol di(meth)acrylate, diethylene glycol di(meth)acrylate, triethylene glycol di(meth)acrylate, tetraethylene glycol di(meth)acrylate, trimethylolpropane tri(meth)acrylate, dipropylene glycol diallyl ether, polyglycol diallyl ether, triethylene glycol divinyl ether, hydroquinone diallyl ether, tetraallyloxyethane, trimethylolpropane diallyl ether, allyl and vinyl ethers of polyfunctional alcohols other than those described above, triallylamine, methylenebisacrylamide, and divinylbenzene.

Note that in the present disclosure, "(meth)acrylate" is used to indicate "acrylate" and/or "methacrylate".

One cross-linkable monomer may be used individually, or two or more cross-linkable monomers may be used in combination. Of these cross-linkable monomers, cross-linkable monomers including two or more olefinic double bonds per molecule are preferable, ethylene glycol dimethacrylate and allyl methacrylate are more preferable, and ethylene glycol dimethacrylate is even more preferable. One cross-linkable monomer may be used individually, or two or more cross-linkable monomers may be used in combination in a freely selected ratio. Of these cross-linkable monomers, cross-linkable monomers including two or more olefinic double bonds per molecule are preferable, and ethylene glycol dimethacrylate is more preferable.

The proportion constituted by the cross-linkable monomer unit in the polymer A of the core portion when all repeating units in the polymer A of the core portion are taken to be 100 mass% is preferably 0.1 mass% or more, more preferably 0.2 mass% or more, and even more preferably 0.3 mass% or more, and is preferably 75 mass% or less, more preferably 70 mass% or less, and even more preferably 65 mass% or less. When the proportion constituted by the cross-linkable monomer unit in the polymer A of the core portion is not less than any of the lower limits set forth above, blocking resistance of a functional layer can be further improved. Moreover, when the proportion constituted by the cross-linkable monomer unit in the polymer A of the core portion is not more than any of the upper limits set forth above, adhesive strength of a functional layer after immersion in electrolyte solution can be further improved.

=Aromatic vinyl monomer unit=

The aromatic vinyl monomer unit is a repeating unit that is derived from an aromatic vinyl monomer. The inclusion of the aromatic vinyl monomer unit makes it easier to control the degree of swelling in electrolyte solution of the polymer A of the core portion and enables further improvement of adhesive strength of a functional layer. Examples of aromatic vinyl monomers that can form the aromatic vinyl monomer unit include, but are not specifically limited to, styrene, $\alpha$-methylstyrene, styrene sulfonic acid, butoxystyrene, and vinylnaphthalene, of which, styrene is preferable. One aromatic vinyl monomer may be used individually, or two or more aromatic vinyl monomers may be used in combination.

The proportion constituted by the aromatic vinyl monomer unit in the polymer A of the core portion when all repeating units in the polymer A are taken to be 100 mass% is preferably 0 mass% or more, more preferably 3 mass% or more, and even more preferably 5 mass% or more, and is preferably 98 mass% or less, more preferably 95 mass% or less, and even more preferably 90 mass% or less. When the proportion constituted by the aromatic vinyl monomer unit in the polymer A of the core portion is within any of the ranges set forth above, this enables an even better balance of adhesive strength of a functional layer after immersion in electrolyte solution and low resistance of an electrochemical device.

=Acidic group-containing monomer unit=

The acidic group-containing monomer unit is a repeating unit that is derived from an acidic group-containing monomer. Examples of acidic group-containing monomers that can form the acidic group-containing monomer unit include carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of these dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, $\alpha$-acetoxyacrylic acid, $\beta$-trans-aryloxyacrylic, and $\alpha$-chloro-$\beta$-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group through hydrolysis can also be used as a carboxy group-containing monomer.

Examples of sulfo group-containing monomers include styrene sulfonic acid, vinyl sulfonic acid, methyl vinyl sulfonic acid, (meth)allyl sulfonic acid, 3-allyloxy-2-hydroxypropane sulfonic acid, and 2-acrylamido-2-methylpropane sulfonic acid.

Note that in the present specification, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate. Of these acidic group-containing monomers, acrylic acid is preferable.

Note that in the present disclosure, "(meth)acryloyl" is used to indicate "acryloyl" and/or "methacryloyl". One acidic group-containing monomer may be used individually, or two or more acidic group-containing monomers may be used in combination.

The proportion constituted by the acidic group-containing monomer unit in the polymer A of the core portion when all repeating units in the polymer A are taken to be 100 mass% is preferably 0 mass% or more, more preferably 0.3 mass% or more, and even more preferably 0.5 mass% or more, and is preferably 20 mass% or less, more preferably 12 mass% or less, and even more preferably 8 mass% or less. When the proportion constituted by the acidic group-containing monomer unit in the polymer A of the core portion is within any of the ranges set forth above, this enables an even better balance of adhesive strength of a functional layer after immersion in electrolyte solution and low resistance of an electrochemical device.

=Amide group-containing monomer unit=

The amide group-containing monomer unit is a repeating unit that is derived from an amide group-containing monomer. Examples of amide group-containing monomers that can form the amide group-containing monomer unit include methacrylamide, acrylamide, dimethylacrylamide, diethylacrylamide, diacetone acrylamide, hydroxyethyl acrylamide, hydroxymethyl acrylamide, hydroxypropyl acrylamide, and hydroxybutyl acrylamide. Of these amide group-containing monomers, acrylamide and hydroxymethyl acrylamide are preferable. One amide group-containing monomer may be used individually, or two or more amide group-containing monomers may be used in combination.

The proportion constituted by the amide group-containing monomer unit in the polymer A of the core portion when all repeating units in the polymer A are taken to be 100 mass% is preferably 0 mass% or more, more preferably 0.3 mass% or more, and even more preferably 0.5 mass% or more, and is preferably 20 mass% or less, more preferably 12 mass% or less, and even more preferably 8 mass% or less. When the proportion constituted by the amide group-containing monomer unit in the polymer A of the core portion is within any of the ranges set forth above, this enables an even better balance of adhesive strength of a functional layer after immersion in electrolyte solution and low resistance of an electrochemical device.

=Volume-average particle diameter D50 of polymer A of core portion=

The volume-average particle diameter D50 of the polymer A of the core portion is 0.1 $\mu$m or more, preferably 0.10 $\mu$m or more, more preferably 0.5 $\mu$m or more, even more preferably 1 $\mu$m or more, more preferably 3.5 $\mu$m or more, and more preferably 4.0 $\mu$m or more, and is 10 $\mu$m or less, preferably 9.5 $\mu$m or less, and more preferably 9 $\mu$m or less. When the volume-average particle diameter D50 of the polymer A of the core portion is not less than any of the lower limits set forth above, adhesive strength of a functional layer after immersion in electrolyte solution can be increased because sufficient deformability of the particulate polymer can be ensured during hot pressing or the like in production of an electrochemical device. Moreover, an increase of resistance of an electrochemical device can be suppressed, and electrochemical characteristics such as cycle characteristics of the electrochemical device can be improved. Furthermore, when the volume-average particle diameter D50 of the polymer A of the core portion is not more than any of the upper limits set forth above, resistance of an electrochemical device can be reduced and electrochemical characteristics such as cycle characteristics of the electrochemical device can be improved because electrolyte solution impregnation increases.

-Shell portion-

The shell portion of the particulate polymer is formed of the polymer B. The polymer B of the shell portion can include any monomer units so long as it can cover the outer surface of the core portion in a manner such that the coverage of the outer surface of the core portion by the shell portion is not less than 1% and not more than 90%. Examples of monomer units that can be included in the polymer B of the shell portion include a cross-linkable monomer unit, an aromatic vinyl monomer unit, an unsaturated carboxylic acid ester monomer unit, an acidic group-containing monomer unit, and a cationic group-containing monomer unit. Of these monomer units, it is preferable that the polymer B includes a cross-linkable monomer unit from a viewpoint of further reducing resistance of an electrochemical device.

Note that the polymer B of the shell portion is normally a polymer having a different chemical composition from the polymer A of the core portion described above.

=Cross-linkable monomer unit=

Examples of cross-linkable monomers that can form the cross-linkable monomer unit of the polymer B of the shell portion include the same monomers as the cross-linkable monomers previously described in the "Core portion" section. One cross-linkable monomer may be used individually, or two or more cross-linkable monomers may be used in combination.

The proportion constituted by the cross-linkable monomer unit in the polymer B of the shell portion when all repeating units in the polymer B are taken to be 100 mass% is preferably 0.1 mass% or more, more preferably 0.2 mass% or more, and even more preferably 0.3 mass% or more, and is preferably 75 mass% or less, more preferably 70 mass% or less, and even more preferably 65 mass% or less. When the proportion constituted by the cross-linkable monomer unit in the polymer B of the shell portion is not less than any of the lower limits set forth above, blocking resistance of a functional layer can be further improved. Moreover, when the proportion constituted by the cross-linkable monomer unit in the polymer B of the shell portion is not more than any of the upper limits set forth above, resistance of an electrochemical device can be further reduced.

=Aromatic vinyl monomer unit=

Examples of aromatic vinyl monomers that can form the aromatic vinyl monomer unit of the polymer B of the shell portion include the same monomers as the aromatic vinyl monomers previously described in the "Core portion" section. One aromatic vinyl monomer may be used individually, or two or more aromatic vinyl monomers may be used in combination.

The proportion constituted by the aromatic vinyl monomer unit in the polymer B of the shell portion when all repeating units in the polymer B are taken to be 100 mass% is preferably 1 mass% or more, more preferably 3 mass% or more, and even more preferably 8 mass% or more, and is preferably 99 mass% or less, more preferably 98 mass% or less, and even more preferably 95 mass% or less.

=Unsaturated carboxylic acid ester monomer unit=

Examples of unsaturated carboxylic acid ester monomers that can form the unsaturated carboxylic acid ester monomer units of the polymer B of the shell portion include the same monomers as the unsaturated carboxylic acid ester monomers having a carbon number of 6 or less previously described in the "Core portion" section. One unsaturated carboxylic acid ester monomer may be used individually, or two or more unsaturated carboxylic acid ester monomers may be used in combination.

The proportion constituted by the unsaturated carboxylic acid ester monomer unit in the polymer B of the shell portion when all repeating units in the polymer B are taken to be 100 mass% is preferably 1 mass% or more, more preferably 3 mass% or more, and even more preferably 8 mass% or more, and is preferably 99 mass% or less, more preferably 98 mass% or less, and even more preferably 95 mass% or less.

=Acidic group-containing monomer unit=

Examples of acidic group-containing monomers that can form the acidic group-containing monomer unit of the polymer B of the shell portion include the same monomers as the acidic group-containing monomers previously described in the "Core portion" section. One acidic group-containing monomer may be used individually, or two or more acidic group-containing monomers may be used in combination.

The proportion constituted by the acidic group-containing monomer unit in the polymer B of the shell portion when all repeating units in the polymer B are taken to be 100 mass% is preferably 0 mass% or more, more preferably 0.3 mass% or more, and even more preferably 0.5 mass% or more, and is preferably 20 mass% or less, more preferably 12 mass% or less, and even more preferably 8 mass% or less.

=Cationic group-containing monomer unit=

The cationic group-containing monomer unit is a repeating unit that is derived from a cationic group-containing monomer. Examples of cationic group-containing monomers that can form the cationic group-containing monomer unit include 3-(methacrylamido)propyltrimethylammonium methyl sulfate, dimethylaminopropyl methacrylamide, dimethylaminopropyl acrylamide, dimethylaminopropyl methacrylate, dimethylaminopropyl acrylate, dimethylaminopropyl acrylamide methyl chloride quaternary, and dimethylaminoethyl acrylate benzyl chloride quaternary.

Although the proportion constituted by the cationic group-containing monomer unit in the polymer B of the shell portion when all repeating units in the polymer B are taken to be 100 mass% may be 0 mass% (i.e., it may be the case that the polymer B does not include the cationic group-containing monomer unit), in a case in which the polymer B does include the cationic group-containing monomer unit, the proportion constituted by the cationic group-containing monomer unit is preferably 0.3 mass% or more, and more preferably 0.5 mass% or more, and is preferably 60 mass% or less, more preferably 48 mass% or less, and even more preferably 45 mass% or less. When the proportion constituted by the cationic group-containing monomer unit in the polymer B of the shell portion is within any of the ranges set forth above, the particulate polymer can easily be produced because this facilitates aggregation of the polymer B on the surface of the polymer A during production of the particulate polymer.

-Volume-average particle diameter D50 of particulate polymer-

The volume-average particle diameter D50 of the particulate polymer including the core portion and the shell portion described above is preferably 1.0 $\mu$m or more, more preferably 2.0 $\mu$m or more, even more preferably 2.5 $\mu$m or more, and particularly preferably 4.3 $\mu$m or more, and is preferably 12 $\mu$m or less, more preferably 11 $\mu$m or less, and even more preferably 10 $\mu$m or less. When the volume-average particle diameter D50 of the particulate polymer is not less than any of the lower limits set forth above, adhesive strength of a functional layer after immersion in electrolyte solution can be further improved because sufficient deformability of the particulate polymer can be further ensured during hot pressing or the like in production of an electrochemical device. Moreover, when the volume-average particle diameter D50 of the particulate polymer is not more than any of the upper limits set forth above, resistance of an electrochemical device can be further reduced and electrochemical characteristics such as cycle characteristics of the electrochemical device can be further improved because reduction of electrolyte solution impregnation is suppressed.

Note that the volume-average particle diameter D50 of the particulate polymer can be adjusted by altering the types and proportions of monomers used to produce the particulate polymer and/or altering the polymerization conditions of the particulate polymer, for example.

Also note that the "volume average particle diameter D50 of the particulate polymer" referred to in the present disclosure can be measured by a method described in the EXAMPLES section of the present specification.

-Ratio of polymer A of core portion and polymer B of shell portion in particulate polymer-

A ratio of the polymer A of the core portion and the polymer B of the shell portion in the particulate polymer is preferably a mass ratio (polymer A of core portion:polymer B of shell portion) of 99:1 to 20:80. When the ratio of the polymer A of the core portion and the polymer B of the shell portion in the particulate polymer is within the range set forth above, this enables an even better balance of improvement of adhesive strength of a functional layer after immersion in electrolyte solution and reduction of resistance of an electrochemical device.

<<Production method of particulate polymer>>

The method by which the particulate polymer having the core-shell structure described above is produced is not specifically limited and may be a polymerization method or an aggregation method. The polymerization method may be emulsion polymerization or suspension polymerization, for example. The aggregation method may be a method in which the polymer A of the core portion and the polymer B of the shell portion are each produced, and then the polymer B is caused to aggregate on the surface of the polymer A to produce the particulate polymer because this enables simple production of the target particulate polymer. The following describes one example of a case in which the particulate polymer having the core-shell structure is produced by the above-described aggregation method.

First, monomers for forming the polymer A of the core portion, a polymerization initiator, and an optionally used dispersion stabilizer and/or molecular weight modifier are mixed to produce a monomer composition A. Next, the produced monomer composition A is subjected to a polymerization reaction in an aqueous solvent such as water to yield a water dispersion containing the polymer A. The polymerization temperature can be set as not lower than 60°C and not higher than 100°C, for example.

In addition, monomers for forming the polymer B of the shell portion, a polymerization initiator, and an optionally used dispersion stabilizer are mixed to produce a monomer composition B. Next, the produced shell portion monomer composition B is subjected to a polymerization reaction in an aqueous solvent such as water to yield a water dispersion containing the polymer B. The polymerization temperature can be set as not lower than 60°C and not higher than 100°C, for example.

Note that ammonium persulfate, for example, can be used as the aforementioned polymerization initiator. Moreover, the aforementioned molecular weight modifier may be a mercaptan such as tert-dodecyl mercaptan, n-dodecyl mercaptan, or octyl mercaptan; a halogenated hydrocarbon such as carbon tetrachloride, methylene chloride, or methylene bromide; $\alpha$-methylstyrene dimer; or a sulfur-containing compound such as tetraethylthiuram disulfide, dipentamethylenethiuram disulfide, or diisopropyl xanthogen disulfide. One of these molecular weight modifiers can be used individually, or two or more of these molecular weight modifiers can be used in combination. Of these molecular weight modifiers, mercaptans are preferable, and tert-dodecyl mercaptan is more preferable. Moreover, sodium dodecylbenzenesulfonate or the like, for example, can be used as the aforementioned dispersion stabilizer.

Note that the proportion constituted by each monomer in the monomer composition A and the monomer composition B is normally the same as the proportion constituted by each monomer unit included in the polymer A of the core portion and the polymer B of the shell portion in the particulate polymer.

Next, a coagulant is added to the water dispersion of the polymer A, the water dispersion of the polymer B is then further added, and the polymer A and the polymer B are caused to react. Thereafter, an additional reagent such as ethylenediaminetetraacetic acid is added. The reaction temperature at this time is preferably 20°C or higher, more preferably 30°C or higher, and even more preferably 40°C or higher, and is preferably 100°C or lower, more preferably 90°C or lower, and even more preferably 80°C or lower. When the reaction temperature is within any of the ranges set forth above, the target particulate polymer can be produced more easily. Moreover, when the reaction temperature is 40°C or higher, the target particulate polymer can be produced even more easily because the polymer B condenses more easily on the surface of the polymer A.

Note that magnesium sulfate, for example, can suitably be used as the aforementioned coagulant.

Also note that the polymer A of the core portion in the particulate polymer is typically anionic as a result of including the unsaturated carboxylic acid ester monomer unit. Therefore, in a case in which the polymer B of the shell portion includes the cationic group-containing monomer unit, good aggregation of the polymer B on the surface of the polymer A can be achieved without using the coagulant described above.

<Binder for functional layer>

The optionally used binder for a functional layer may be a known binder that is water-insoluble and can be dispersed in a dispersion medium such as water. For example, the binder for a functional layer may be a thermoplastic elastomer. The thermoplastic elastomer is preferably a conjugated diene polymer or an acrylic polymer, and more preferably an acrylic polymer.

Here, the term "conjugated diene polymer" refers to a polymer that includes a conjugated diene monomer unit. Specific examples of conjugated diene polymers include a polymer that includes an aromatic vinyl monomer unit and an aliphatic conjugated diene monomer unit, such as styrene-butadiene copolymer (SBR), and acrylic rubber (NBR) (polymer including an acrylonitrile unit and a butadiene unit). The term "acrylic polymer" refers to a polymer that includes a (meth) acrylic acid ester monomer unit. Examples of (meth)acrylic acid ester monomers that can form the (meth)acrylic acid ester monomer unit include the same monomers as can be used for producing the particulate polymer. Note that one of these binders for a functional layer may be used individually, or two or more of these binders for a functional layer may be used in combination. However, in a case in which a binder for a functional layer is used, a polymer that serves as the binder for a functional layer is a different polymer from the particulate polymer having the core-shell structure formed of the specific polymers described above.

The volume-average particle diameter D50 of the binder for a functional layer is preferably not less than 0.1 $\mu$m and not more than 0.5 $\mu$m. When the volume-average particle diameter D50 of the binder for a functional layer is 0.1 $\mu$m or more, dispersibility of the binder for a functional layer can be increased. Moreover, when the volume-average particle diameter D50 of the binder for a functional layer is 0.5 $\mu$m or less, adhesiveness of the binder for a functional layer can be increased.

The volume-average particle diameter D50 of the binder for a functional layer can be measured by a method described in the EXAMPLES section.

The amount of the binder for a functional layer in the composition for a functional layer is not specifically limited but is preferably 1 part by mass or more, more preferably 2 parts by mass or more, and even more preferably 5 parts by mass or more per 100 parts by mass of the particulate polymer, and is preferably 50 parts by mass or less, more preferably 45 parts by mass or less, and even more preferably 40 parts by mass or less per 100 parts by mass of the particulate polymer. When the amount of the binder for a functional layer in the composition for a functional layer is not less than any of the lower limits set forth above, binding capacity of the binder for a functional layer can be further improved, and shedding of the particulate polymer from a functional layer before heating or before immersion in electrolyte solution can be sufficiently prevented. Moreover, when the amount of the binder for a functional layer in the composition for a functional layer is not more than any of the upper limits set forth above, reduction of ion conductivity of a functional layer and deterioration of electrochemical characteristics of an electrochemical device can be inhibited.

The production method of the binder for a functional layer may be solution polymerization, suspension polymerization, emulsion polymerization, or the like, for example. Of these methods, emulsion polymerization and suspension polymerization are preferable because polymerization can be carried out in water and a water dispersion containing the binder for a functional layer in a particulate form can suitably be used in that form as a material of the composition for a functional layer.

<<Non-conductive particles>>

Known non-conductive particles that are used in electrochemical devices can be used without any specific limitations as the optionally used non-conductive particles.

Specifically, although both inorganic fine particles and organic fine particles other than the particulate polymer and the binder for a functional layer described above can be used as the non-conductive particles, inorganic fine particles are normally used. In particular, the material of the non-conductive particles is preferably an electrochemically stable material that is present stably in the environment of use of an electrochemical device. Examples of materials of the non-conductive particles that are preferable from the viewpoints set forth above include particles of oxides such as aluminum oxide (alumina), hydrous aluminum oxide (boehmite), silicon oxide, magnesium oxide (magnesia), calcium oxide, titanium oxide (titania), $BaTiO_3$, ZrO, and alumina-silica composite oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clays such as talc and montmorillonite. These particles may be subjected to element substitution, surface treatment, solid solution treatment, and/or the like as necessary.

One of these types of non-conductive particles may be used individually, or two or more of these types of non-conductive particles may be used in combination.

The amount of the non-conductive particles in the composition for a functional layer is not specifically limited but is preferably 30 parts by mass or more, more preferably 40 parts by mass or more, and even more preferably 50 parts by mass or more per 100 parts by mass of the particulate polymer, and is preferably 99 parts by mass or less, more preferably 98 parts by mass or less, and even more preferably 95 parts by mass or less per 100 parts by mass of the particulate polymer.

<<Water-soluble polymer>>

The optionally used water-soluble polymer is a component that can impart viscousness to the composition for a functional layer. Note that since the water-soluble polymer normally displays adhesiveness and electrolyte solution resistance, the water-soluble polymer can fulfill a role of assisting adhesion between components in a functional layer and between electrochemical device members inside of an electrochemical device.

When a substance is described as "water-soluble" in the present disclosure, this means that when 0.5 g of the substance is dissolved in 100 g of water at 25°C, insoluble content is less than 1.0 mass%. Also note that in the case of a substance for which the solubility thereof varies depending on the pH of water, the substance is considered to be "water-soluble" so long as there is at least one pH at which the substance satisfies the definition of "water-soluble" set forth above.

Examples of water-soluble polymers that can be used include natural polymers, semi-synthetic polymers, and synthetic polymers.

-Natural polymer-

Examples of natural polymers that may be used include polysaccharides and proteins derived from plants and animals, fermentation treated products of these polysaccharides and proteins by microorganisms or the like, and heat-treated products of these polysaccharides and proteins.

These natural polymers can be classified as plant-based natural polymers, animal-based natural polymers, microorganism-produced natural polymers, and so forth.

Examples of plant-based natural polymers include gum arabic, gum tragacanth, galactan, guar gum, carob gum, karaya gum, carrageenan, pectin, mannan, quince seed (marmelo), algal colloid (phaeophyceae extract), starch (for example, starch derived from rice, corn, potato, or wheat), and glycyrrhizin. Examples of animal-based natural polymers include collagen, casein, albumin, and gelatin. Examples of microorganism-produced natural polymers include xanthan gum, dextran, succinoglucan, and pullulan.

-Semi-synthetic polymer-

Examples of semi-synthetic polymers that may be used include cellulosic semi-synthetic polymers. Cellulosic semi-synthetic polymers can be categorized as non-ionic cellulosic semi-synthetic polymers, anionic cellulosic semi-synthetic polymers, and cationic cellulosic semi-synthetic polymers.

Examples of non-ionic cellulosic semi-synthetic polymers that may be used include alkyl celluloses such as methyl cellulose, methyl ethyl cellulose, ethyl cellulose, and microcrystalline cellulose; and hydroxyalkyl celluloses such as hydroxyethyl cellulose, hydroxybutyl methyl cellulose, hydroxypropyl cellulose, hydroxypropyl methyl cellulose, hydroxyethyl methyl cellulose, hydroxypropyl methyl cellulose stearoxy ether, carboxymethyl hydroxyethyl cellulose, alkyl hydroxyethyl cellulose, and nonoxynyl hydroxyethyl cellulose.

Examples of anionic cellulosic semi-synthetic polymers include substitution products obtained by substitution of the non-ionic cellulosic semi-synthetic polymers described above with various derivative groups and salts (sodium salts, ammonium salts, and the like) of these substitution products. Specific examples include sodium cellulose sulfate, methyl cellulose, methyl ethyl cellulose, ethyl cellulose, carboxymethyl cellulose (CMC), and salts thereof.

Examples of cationic cellulosic semi-synthetic polymers include low-nitrogen hydroxyethyl cellulose dimethyl diallylammonium chloride (polyquaternium-4), O-[2-hydroxy-3-(trimethylammonio)propyl]hydroxyethyl cellulose chloride (polyquaternium-10), and O-[2-hydroxy-3-(lauryldimethylammonio)propyl]hydroxyethyl cellulose chloride (polyquaternium-24).

-Synthetic polymer-

Examples of synthetic polymers that may be used include salts of polyacrylic acid such as sodium polyacrylate, polyvinyl alcohol, polyethylene oxide, polyvinyl pyrrolidone, copolymers of vinyl alcohol and acrylic acid or a salt of acrylic acid, fully or partially saponified copolymers of vinyl acetate and maleic anhydride, maleic acid, or fumaric acid, modified polyvinyl alcohol, modified polyacrylic acid, polyethylene glycol, polycarboxylic acid, ethylenevinyl alcohol copolymers, vinyl acetate polymers, and acrylamide polymers having an introduced carboxy group.

The amount of the water-soluble polymer in the composition for a functional layer is not specifically limited but is preferably 0.01 parts by mass or more, more preferably 0.05 parts by mass or more, and even more preferably 0.1 parts by mass or more per 100 parts by mass of the particulate polymer, and is preferably 10 parts by mass or less, more preferably 8 parts by mass or less, and even more preferably 5 parts by mass or less per 100 parts by mass of the particulate polymer.

<Other components>

Commonly known components can be used as the optionally used other components without any specific limitations so long as they do not affect electrochemical reactions. For example, a known additive such as a viscosity modifier may be used as another component. One of these other components may be used individually, or two or more of these other components may be used in combination.

<Production method of composition for electrochemical device functional layer>

Although no specific limitations are placed on the method by which the composition for a functional layer is produced, the composition for a functional layer is normally produced by mixing the above-described particulate polymer having a core-shell structure, water as a dispersion medium, and the binder for a functional layer, non-conductive particles, water-soluble polymer, and/or other components that are used as necessary. The mixing can be performed using a typical stirring vessel, ball mill, sand mill, bead mill, pigment disperser, ultrasonic disperser, grinding machine, homogenizer, planetary mixer, FILMIX, or the like. Although no specific limitations are placed on the mixing conditions, the mixing can normally be performed in a temperature range of from room temperature to 80°C for 10 minutes to several hours.

(Functional layer for electrochemical device)

The presently disclosed functional layer for an electrochemical device is a layer that is formed using the composition for a functional layer set forth above. The presently disclosed functional layer is obtained by, for example, applying the composition for a functional layer set forth above onto the surface of any substrate to form a coating film, and subsequently drying the coating film. In other words, the presently disclosed functional layer is formed of a dried product of the composition for a functional layer set forth above and normally contains the above-described particulate polymer and the optional binder for a functional layer, non-conductive particles, water-soluble polymer, and/or other components. Note that each component contained in the functional layer is a component that was contained in the composition for a functional layer set forth above and that the preferred ratio of each component is the same as the preferred ratio of that component in the composition for a functional layer.

(Laminate for electrochemical device)

The laminate for an electrochemical device includes a substrate and a functional layer on the substrate, wherein the functional layer is formed using the composition for a functional layer set forth above. The presently disclosed laminate for an electrochemical device can reduce resistance of an electrochemical device as a result of including a functional layer that has been formed using the composition for a functional layer set forth above.

<Substrate>

The substrate should be selected as appropriate according to the type of electrochemical device member for which the presently disclosed laminate is to be used. For example, in a case in which the presently disclosed laminate is to be used as a separator, a separator substrate is used as the substrate. Moreover, in a case in which the presently disclosed laminate is to be used as an electrode, for example, an electrode substrate is used as the substrate.

<<Separator substrate>>

The separator substrate is not specifically limited and may be a known separator substrate such as an organic separator substrate. The organic separator substrate is a porous member that is formed of an organic material. For example, the organic separator substrate may be a microporous membrane or non-woven fabric that contains a polyolefinic resin such as polyethylene, polypropylene, polybutene, or polyvinyl chloride, an aromatic polyamide resin, or the like.
Although the separator substrate may be of any thickness, the thickness thereof is preferably not less than 5 $\mu$m and not more than 30 $\mu$m, more preferably not less than 5 $\mu$m and not more than 20 $\mu$m, and even more preferably not less than 5 $\mu$m and not more than 18 $\mu$m.

<<Electrode substrate>>

The electrode substrate (positive electrode substrate or negative electrode substrate) is not specifically limited and may be an electrode substrate obtained by forming an electrode mixed material layer on a current collector.
The current collector, an electrode active material (positive electrode active material or negative electrode active material) and a binder for an electrode mixed material layer (binder for a positive electrode mixed material layer or binder for a negative electrode mixed material layer) in the electrode mixed material layer, and the method by which the electrode mixed material layer is formed on the current collector may be known examples thereof such as those described in JP2013-145763A, for example.

<Production method of laminate>

No specific limitations are placed on the method by which the presently disclosed laminate is produced. For example, the presently disclosed laminate can be produced by a method in which a functional layer is formed on a release sheet and then this functional layer is transferred onto the substrate. However, from a viewpoint of eliminating the need for a transfer operation and increasing production efficiency, it is preferable that the laminate is produced through a step of supplying the composition for a functional layer onto the substrate (supply step) and a step of drying the composition for a functional layer that has been supplied onto the substrate (drying step).

<<Supply step>>

In the supply step, the presently disclosed composition for a functional layer set forth above is supplied onto the substrate to form a coating film of the composition for a functional layer on the substrate. The method by which the composition for a functional layer is supplied onto the substrate is not specifically limited and may be by applying the composition for a functional layer onto the surface of the substrate or by immersing the substrate in the composition for a functional layer. Application of the composition for a functional layer onto the surface of the substrate is preferable because this makes it easy to control the thickness of the produced functional layer.
Examples of methods by which the composition for a functional layer can be applied onto the surface of the substrate include, but are not specifically limited to, doctor blading, reverse roll coating, direct roll coating, gravure coating, bar coating, extrusion coating, and brush coating.
Note that in the supply step, a coating film of the composition for a functional layer may be formed on just one side of the substrate, or coating films of the composition for a functional layer may be formed on both sides of the substrate.

<<Drying step>>

In the drying step, the coating film of the composition for a functional layer that has been formed on the substrate in the supply step is dried to remove the dispersion medium and form a functional layer.

The coating film of the composition for a functional layer can be dried by any commonly known method without any specific limitations. Examples of drying methods that can be used include drying by warm, hot, or low-humidity air; drying in a vacuum; and drying by irradiation with infrared light, electron beams, or the like. Although no specific limitations are placed on the drying conditions, the drying temperature is preferably 50°C to 150°C, and the drying time is preferably 1 minute to 30 minutes.

Note that in production of the presently disclosed laminate, after the supply step and the drying step have been performed with respect to one side of the substrate to form a functional layer, the supply step and the drying step may be further performed with respect to the other side of the substrate to form a functional layer.

(Electrochemical device)

The presently disclosed electrochemical device includes the laminate for an electrochemical device set forth above. For example, the presently disclosed electrochemical device can include an electrode and a separator and can include the presently disclosed laminate set forth above as at least one of the electrode and the separator. Such an electrochemical device has low resistance and excellent electrochemical characteristics such as cycle characteristics as a result of the presently disclosed laminate set forth above being used as at least one of an electrode and a separator.

Note that the presently disclosed electrochemical device should include at least the presently disclosed laminate, and thus may also include constituent elements other than the presently disclosed laminate so long as the effects according to the present disclosure are not significantly lost.

The presently disclosed electrochemical device may be a lithium ion secondary battery or an electric double-layer capacitor, for example, and is preferably a lithium ion secondary battery, but is not specifically limited thereto.

Although the following describes a case in which a lithium ion secondary battery is given as one example of the presently disclosed electrochemical device and in which the presently disclosed laminate set forth above is used as a separator of the lithium ion secondary battery, the presently disclosed electrochemical device is not limited to the following.

A lithium ion secondary battery that is one example of the presently disclosed electrochemical device includes a positive electrode, a negative electrode, a separator, and an electrolyte solution, wherein the separator is the laminate set forth above.

<Positive electrode and negative electrode>

Electrodes that are formed of known electrode substrates (positive electrode substrate and negative electrode substrate) previously described in the "Substrate" section can be used as the positive electrode and the negative electrode.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as γ-butyrolactone and methyl formate; ethers such as 1,2-dimethoxyethane and tetrahydrofuran; and sulfur-containing compounds such as sulfolane and dimethyl sulfoxide.

Furthermore, a mixture of these organic solvents may be used. Of these organic solvents, carbonates are preferable due to having high permittivity and a wide stable potential region. In general, lithium ion conductivity tends to increase when an organic solvent having a low viscosity is used. Therefore, lithium ion conductivity can be adjusted through the type of organic solvent that is used.

The concentration of the electrolyte in the electrolyte solution can be adjusted as appropriate. Furthermore, known additives may be added to the electrolyte solution.

<Production method of electrochemical device>

No specific limitations are placed on the method by which the presently disclosed electrochemical device is produced. For example, the lithium ion secondary battery described above as one example of the presently disclosed electrochemical device can be produced by, for example, stacking the positive electrode and the negative electrode with the separator (presently disclosed laminate) in-between, performing rolling, folding, or the like of the resultant stack as necessary to place the stack in a battery container, injecting the electrolyte solution into the battery container, and sealing the battery container. In order to prevent pressure increase inside the battery and occurrence of overcharging or overdischarging, an expanded metal, an overcurrent preventing device such as a fuse or a PTC device, a lead plate, or the like may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.
Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.
Measurements and evaluations of various attributes in the examples and comparative examples were performed according to the following methods.

<Volume-average particle diameter D50 of polymer A>

A polymer A produced in each example or comparative example was used as a measurement sample. The measurement sample was weighed out in an amount equivalent to 0.1 g, was taken into a beaker, and 0.1 mL of alkylbenzene sulfonic acid aqueous solution (DRIWEL produced by FUJIFILM Corporation) as a dispersant was added thereto. After further adding 10 mL to 30 mL of a diluent (ISOTON II produced by Beckman Coulter, Inc.) into the beaker, 3 minutes of dispersing was performed using a 20 W (Watt) ultrasonic disperser. Thereafter, a particle size analyzer (Multisizer produced by Beckman Coulter, Inc.) was used to measure the average particle diameter by volume (volume-average particle diameter D50) of the measurement sample under conditions of an aperture diameter of 20 $\mu$m, a medium of ISOTON II, and a measured particle count of 100,000.

<Volume-average particle diameter D50 of particulate polymer>

A particulate polymer produced in each example or comparative example was used as a measurement sample instead of a polymer A produced in each example or comparative example. With the exception of the above, the volume-average particle diameter D50 of the particulate polymer was measured using a Multisizer produced by Beckman Coulter, Inc. in the same manner as in the method described above in <Volume-average particle diameter D50 of polymer A>.
Moreover, for particulate polymers produced in Examples 12 to 16 and Comparative Example 6, in addition to measurement using the above-described particle size analyzer, the volume-average particle diameter D50 of the particulate polymer was measured using a laser diffraction/scattering particle size analyzer (LS 13 320 XR produced by Beckman Coulter, Inc.).

<Volume-average particle diameter D50 of binder for functional layer>

A binder for a functional layer produced in each example was used as a measurement sample instead of a polymer A produced in each example or comparative example. With the exception of the above, the volume-average particle diameter D50 of the binder for a functional layer was measured in the same manner as in the method described above in <Volume-average particle diameter D50 of polymer A>.

<Coverage of outer surface of core portion by shell portion>

The coverage of the outer surface of a core portion by a shell portion was confirmed using a scanning electron microscope. Specifically, a water dispersion of a particulate polymer was dripped onto aluminum foil, and the water dispersion was dried for 3 hours using a blowing dryer set to 25°C to prepare a sample for observation.

The area of the overall particulate polymer and the area of a polymer B of a shell portion on the particulate polymer were each determined from an image of the sample that was observed using a scanning electron microscope (SEM), and the coverage of an outer surface of a core portion by the shell portion was calculated based on the following formula.

Coverage of outer surface of core portion by shell portion (%) = (Area of polymer B of shell portion on particulate polymer/Area of particulate polymer) $\times$ 100

Note that in the image of the sample observed by the scanning electron microscope, a polymer having a different particle diameter to the particle diameter of the particulate polymer was identified as the polymer B of the shell portion.

<Degree of swelling in electrolyte solution>

A polymer A produced in each example or comparative example was dispersed in deionized water to produce a water dispersion of the polymer A. Next, the water dispersion of the polymer A was loaded into a petri dish made of polytetrafluoroethylene. The water dispersion of the polymer A in the petri dish was dried at a temperature of 25°C for 48 hours to obtain a powdered sample. Approximately 0.2 g of this sample was pressed at a temperature of 200°C and a pressure of 5 MPa for 2 minutes to obtain a test specimen. The weight of this test specimen was measured and was taken to be W0.

Next, the test specimen was immersed in electrolyte solution having a temperature of 60°C for 72 hours. Note that a solution obtained by dissolving $LiPF_6$ as a supporting electrolyte with a concentration of 1 mol/L in a mixed solvent of ethylene carbonate (EC), diethyl carbonate (DEC), and vinylene carbonate (VC) (volume mixing ratio: EC/DEC/VC = 68.5/30/1.5) was used as the electrolyte solution.

Thereafter, the test specimen was removed from the electrolyte solution, and electrolyte solution attached to the surface of the test specimen was wiped off. The weight of the test specimen was then measured and was taken to be W1. The measured weights W0 and W1 were used to calculate the degree of swelling in electrolyte solution S ($\times$) of the polymer A by: S ($\times$) = W1/W0.

<Adhesiveness after immersion in electrolyte solution>

A functional layer-equipped separator produced in each example or comparative example was cut out as a strip of 10 mm $\times$ 50 mm. The functional layer-equipped separator was arranged along the surface of a porous membrane of a porous membrane-equipped negative electrode to produce a laminate including the negative electrode and the functional layer-equipped separator, and this laminate was taken to be a test specimen.

The test specimen was placed in laminate packing with approximately 300 μL of electrolyte solution. Once 12 hours had passed, the test specimen was subjected to 20 minutes of hot pressing, together with the laminate packing, using a flat plate press with a temperature of 40°C and a load of 1.0 MPa so as to produce a laminate including the negative electrode and the functional layer-equipped separator. Note that a solution obtained by dissolving $LiPF_6$ as a supporting electrolyte with a concentration of 1 mol/L in a mixed solvent of ethylene carbonate (EC), diethyl carbonate (DEC), and vinylene carbonate (VC) (EC/DEC/VC (volume mixing ratio at 25°C) = 68.5/30/1.5) was used as the electrolyte solution.

Thereafter, the test specimen was removed, and electrolyte solution attached to the surface of the test specimen was wiped off. Next, the test specimen was placed with the surface at the current collector-side of the negative electrode facing downward, and cellophane tape was affixed to the surface at the current collector-side of the negative electrode. Tape prescribed by JIS Z1522 was used as the cellophane tape. Moreover, the cellophane tape was fixed to a horizontal test stage in advance. The stress when the separator was peeled off by pulling one end of the separator vertically upward at a pulling speed of 50 mm/min was measured. Three measurements were made in this manner. An average value of the stress was determined as the peel strength P1 and was evaluated by the following standard. A larger peel strength P1 indicates that the functional layer has higher adhesive strength after immersion in electrolyte solution.

A: Peel strength P1 of 3.0 N/m or more
B: Peel strength P1 of not less than 2.0 N/m and less than 3.0 N/m
C: Peel strength P1 of not less than 0.5 N/m and less than 2.0 N/m
D: Peel strength P1 of less than 0.5 N/m

<Adhesiveness to separator (blocking resistance)>

A functional layer-equipped separator produced in each example or comparative example was cut out as a strip of 10 mm $\times$ 50 mm. Next, a separator that was the same as that used in the functional layer-equipped separator (hereinafter, this separator is referred to as a "separator A" for convenience of description) was provided at the functional layer-side of the functional layer-equipped separator to produce a laminate, and this laminate was taken to be a test specimen.

The test specimen was placed in laminate packing and was hot pressed for 30 minutes, together with the packing, using a flat plate press with a temperature of 40°C and a load of 6.0 MPa.

Thereafter, the test specimen was removed, was then placed with the separator A-side thereof facing downward, and cellophane tape was affixed to the surface. Tape prescribed by JIS Z1522 was used as the cellophane tape. Moreover, the cellophane tape was fixed to a horizontal test stage in advance. The stress when the functional layer-equipped separator was peeled off by pulling one end of the functional layer-equipped separator vertically upward at a pulling speed of 50 mm/min was measured. Three measurements were made in this manner. An average value of the stress was determined as the peel strength P2 and was evaluated by the following standard. A larger peel strength P2 indicates higher adhesiveness of the functional layer to the separator and better blocking resistance.

A: Separator detaches prior to peel strength test
B: Peel strength P2 of not less than 0.0 N/m and less than 0.2 N/m
C: Peel strength P2 of not less than 0.2 N/m and less than 0.5 N/m
D: Peel strength P2 of 0.5 N/m or more

<Cycle characteristics of secondary battery>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging (upper limit cell voltage 4.20 V) was performed by a 0.2C constant-current method and CC discharging was performed to 3.00 V by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 25°C. The discharge capacity of the $1^{st}$ cycle was defined as X1 and the discharge capacity of the $100^{th}$ cycle was defined as X2.

The discharge capacity X1 and the discharge capacity X2 were used to determine a capacity maintenance rate $\Delta C'$ ($= (X2/X1) \times 100(\%)$), which was then evaluated by the following standard. A larger value for the capacity maintenance rate $\Delta C'$ indicates that the secondary battery has better cycle characteristics upon being cycled 100 times. Note that when a secondary battery has excellent cycle characteristics upon being cycled 100 times, this is presumed to be because a functional layer included in the secondary battery can hold electrolyte solution well.

A: Capacity maintenance rate $\Delta C'$ of 95% or more
B: Capacity maintenance rate $\Delta C'$ of not less than 92% and less than 95%
C: Capacity maintenance rate $\Delta C'$ of not less than 90% and less than 92%
D: Capacity maintenance rate $\Delta C'$ of less than 90%

(Example 1)

<Production of polymer A>

A reactor including a stirrer was supplied with 80 parts of deionized water. The gas phase was purged with nitrogen gas, and the temperature was raised to 80°C.

Meanwhile, a monomer composition A was produced in a separate vessel by mixing 60 parts of deionized water, 0.2 parts of sodium dodecylbenzenesulfonate as a dispersion stabilizer, 40 parts of styrene as an aromatic vinyl monomer, 55.5 parts of n-butyl acrylate as an unsaturated carboxylic acid ester monomer having a carbon number of 4, 0.5 parts of ethylene glycol dimethacrylate and 1 part of glycidyl methacrylate as cross-linkable monomers, 1 part of acrylic acid as an acidic group-containing monomer, and 1 part of acrylamide and 1 part of hydroxymethyl acrylamide as amide group-containing monomers.

The produced monomer composition A was added into a reactor that had been heated to 80°C over 1 minute and 30 seconds. Thereafter, 0.3 parts of ammonium persulfate as a polymerization initiator was supplied into the reactor, and a reaction was performed for 30 minutes. The monomer composition A was then continuously added into the above-described reactor over 3 hours to perform polymerization. The reaction was performed at 80°C during the addition.

Once the addition was complete, a further 2 hours of stirring was performed at 80°C, and then the reaction was ended to yield a polymer A having a particulate form. The volume-average particle diameter D50 and degree of swelling in electrolyte solution of the obtained polymer A were measured. The results are shown in Table 1.

<Production of polymer B>

A reactor including a stirrer was supplied with 80 parts of deionized water. The gas phase was purged with nitrogen gas, and the temperature was raised to 80°C.

Meanwhile, a monomer composition B was produced in a separate vessel by mixing 60 parts of deionized water, 0.5 parts of sodium dodecylbenzenesulfonate as a dispersion stabilizer, 63.2 parts of styrene as an aromatic vinyl monomer, 33 parts of n-butyl acrylate as an unsaturated carboxylic acid ester having a carbon number of 4, 0.8 parts of ethylene glycol dimethacrylate as a cross-linkable monomer, and 3 parts of acrylic acid as an acidic group-containing monomer.

The produced monomer composition B was added into a reactor that had been heated to 80°C over 1 minute and 30 seconds. Thereafter, 0.3 parts of ammonium persulfate as a polymerization initiator was supplied into the reactor, and a reaction was performed for 30 minutes. The monomer composition B was then continuously added into the above-described reactor over 3 hours to perform polymerization. The reaction was carried out at 80°C during the addition.

Once the addition was complete, a further 3 hours of stirring was performed at 80°C, and then the reaction was ended to yield a polymer B having a particulate form.

<Production of particulate polymer>

A reactor including a stirrer was charged with 40 parts in terms of solid content of the polymer A and was then further charged with deionized water such that the solid content concentration of the polymer A was 15%. In addition, 3 parts in terms of solid content of magnesium sulfate as a coagulant was added, and heating was performed to 60°C.

At 15 minutes after the start of heating, 60 parts in terms of solid content of the polymer B was added, and this state was maintained for a further 1 hour and 30 minutes. Thereafter, 7.2 parts of ethylenediaminetetraacetic acid was added, and a reaction was performed at 60°C for 2 hours to yield a water dispersion of a polymerized product.

The water dispersion of the polymerized product was stirred while adding sulfuric acid dropwise at room temperature (25°C) to adjust the pH to 7.0. Next, separation was performed by filtration, and then 200 parts of deionized water was added relative to 100 parts of the resultant solid content, and water washing treatment (washing, filtration, and dehydration) was repeated a number of times. Thereafter, separation was performed by filtration, and then deionized water was further added to yield a water dispersion of a particulate polymer.

The obtained particulate polymer was observed using a scanning electron microscope (SEM), and the particulate polymer was confirmed to have a core-shell structure in which the polymer B partially covered the outer surface of the polymer A. The obtained particulate polymer was also used to determine the coverage of the outer surface of the core portion by the shell portion. The result is shown in Table 1.

<Production of binder for functional layer>

A reactor including a stirrer was supplied with 70 parts of deionized water, 0.15 parts of sodium lauryl sulfate (EMAL® 2F (EMAL is a registered trademark in Japan, other countries, or both) produced by Kao Corporation) as an emulsifier, and 0.3 parts of ammonium persulfate as a polymerization initiator. The gas phase was purged with nitrogen gas, and the temperature was raised to 80°C.

Meanwhile, a monomer composition was produced in a separate vessel by mixing 50 parts of deionized water, 0.5 parts of sodium dodecylbenzenesulfonate as a dispersion stabilizer, 94 parts of n-butyl acrylate, 2 parts of methacrylic acid, 2 parts of acrylonitrile, 1 part of allyl methacrylate, and 1 part of allyl glycidyl ether.

The monomer composition was continuously added into the above-described reactor including a stirrer over 3 hours to perform polymerization. The reaction was carried out at 60°C during the addition. Once the addition was complete, a further 2 hours of stirring was performed at 80°C, and then the reaction was ended to yield a water dispersion containing a binder (acrylic polymer) for a functional layer. The obtained binder for a functional layer had a volume-average particle diameter D50 of 0.25 $\mu$m.

<Production of composition for functional layer>

A pre-mixing slurry was obtained by adding 0.5 parts of sodium polyacrylate as a water-soluble polymer to 70 parts of alumina (AKP3000 produced by Sumitomo Chemical Co., Ltd.; volume-average particle diameter: 0.7 $\mu$m) as non-conductive particles, further adding deionized water to adjust the solid content concentration to 55%, and mixing these materials using a ball mill.

In addition, 5.0 parts of the binder for a functional layer, 10 parts of the particulate polymer having a core-shell structure, 1.5 parts of carboxymethyl cellulose as a viscosity modifier (thickener), and 0.2 parts of sodium dodecylbenzenesulfonate (NEOPELEX G-15 produced by Kao Corporation) as a dispersant were added relative to 70 parts of the non-conductive particles and were mixed such that the solid content concentration was 40% to yield a composition for a functional layer.

<Production of functional layer-equipped separator>

A microporous membrane (thickness: 12 $\mu$m) made of polyethylene was prepared as a separator substrate. The composition for a functional layer obtained as described above was applied onto one side of this separator substrate by bar coating to form a coating film. Next, the separator substrate was dried at 50°C to dry the coating film and form a functional layer. The same operations were also performed with respect to the other side of the separator substrate to thereby produce a functional layer-equipped separator including functional layers of 2.0 $\mu$m in thickness at both sides of the separator substrate.

<Production of positive electrode>

A slurry composition for a positive electrode was produced by mixing 100 parts of LiCoO$_2$ (volume-average particle diameter: 12 $\mu$m) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methylpyrrolidone as a solvent, adjusting the total solid content concentration to 70%, and mixing these materials in a planetary mixer.
The slurry composition for a positive electrode was applied onto aluminum foil of 20 $\mu$m in thickness serving as a current collector using a comma coater such as to have a thickness after drying of approximately 150 $\mu$m. The slurry composition for a positive electrode was dried by conveying the aluminum foil inside of a 60°C oven for 2 minutes at a speed of 0.5 m/min. Thereafter, 2 minutes of heat treatment was performed at 120°C to obtain a pre-pressing positive electrode web. This pre-pressing positive electrode web was rolled by roll pressing to obtain a post-pressing positive electrode including a positive electrode mixed material layer (thickness: 60 $\mu$m).

<Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the reaction to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing the target binder for a negative electrode mixed material layer.
After compounding 80 parts of artificial graphite (volume-average particle diameter: 15.6 $\mu$m) as a negative electrode active material (1) and 16 parts of a silicon-based active material SiOx (volume-average particle diameter: 4.9 $\mu$m) as a negative electrode active material (2), and then mixing deionized water and 2.5 parts in terms of solid content of a 2% aqueous solution of carboxymethyl cellulose sodium salt (MAC350HC produced by Nippon Paper Industries Co., Ltd.) as a viscosity modifier therewith so as to adjust the solid content concentration to 68%, these materials were further mixed at 25°C for 60 minutes. The solid content concentration was further adjusted to 62% with deionized water, and then a further 15 minutes of mixing was performed at 25°C to yield a mixture. Deionized water and 1.5 parts in terms of solid content of the water dispersion containing the binder for a negative electrode mixed material layer were added to this mixture, the final solid content concentration was adjusted to 52%, and a further 10 minutes of mixing was performed to yield a mixture. This mixture was subjected to defoaming under reduced pressure to yield a slurry composition for a negative electrode having good fluidity.
The slurry composition for a negative electrode was applied onto copper foil of 20 $\mu$m in thickness serving as a current collector using a comma coater such as to have a thickness after drying of approximately 150 $\mu$m. The slurry composition for a negative electrode was dried by conveying the copper foil inside of a 60°C oven for 2 minutes at a speed of 0.5 m/min. Thereafter, 2 minutes of heat treatment was performed at 120°C to obtain a pre-pressing negative electrode web. This pre-pressing negative electrode web was rolled by roll pressing to obtain a post-pressing negative electrode including a negative electrode mixed material layer (thickness: 80 $\mu$m).

<Production of lithium ion secondary battery>

The post-pressing positive electrode produced as described above was cut out as 2.8 cm × 3.8 cm as a mixed material layer and was placed with the surface at the positive electrode mixed material layer-side thereof facing upward. The functional layer-equipped separator was cut out as 3.5 cm × 4.5 cm and was arranged on this positive electrode mixed material layer. In addition, the post-pressing negative electrode produced as described above was cut out as 3.0 cm × 4.0 cm and was arranged on the functional layer-equipped separator such that the surface at the negative electrode mixed material layer-side thereof faced toward the separator. During the above, a front surface of the functional layer-equipped separator was arranged facing toward the positive electrode and a rear surface of the functional layer-equipped separator was arranged facing toward the negative electrode so as to obtain a laminate.

This laminate was pressed at 50°C and 1 MPa to obtain a flattened laminate and was subsequently enclosed in an aluminum packing case serving as a battery case. Electrolyte solution (solution obtained by dissolving $LiPF_6$ as a supporting electrolyte with a concentration of 1 mol/L in a mixed solvent of ethylene carbonate (EC)/diethyl carbonate (DEC)/vinylene carbonate (VC) [volume mixing ratio: EC/DEC/VC = 68.5/30/1.5]) was injected such that no air remained. An opening of the aluminum packing case was closed by heat sealing at a temperature of 150°C to produce a stacked lithium ion secondary battery.

The obtained lithium ion secondary battery was used to evaluate cycle characteristics of the secondary battery. The result is shown in Table 1.

(Examples 2 and 3)

In production of the monomer composition A, 55.5 parts of ethyl acrylate as an unsaturated carboxylic acid ester monomer having a carbon number of 2 was used instead of n-butyl acrylate in Example 2, and 55.5 parts of hexyl acrylate as an unsaturated carboxylic acid ester monomer having a carbon number of 6 was used instead of n-butyl acrylate in Example 3. With the exception of the above, a polymer A, a polymer B, a particulate polymer, a composition for a functional layer, a functional layer-equipped separator, a positive electrode, a negative electrode, and a lithium ion secondary battery were produced in the same way as in Example 1. Moreover, measurements and evaluations were conducted in the same way as in Example 1. The results are shown in Table 1.

(Examples 4 and 5)

A polymer A, a polymer B, a particulate polymer, a composition for a functional layer, a functional layer-equipped separator, a positive electrode, a negative electrode, and a lithium ion secondary battery were produced in the same way as in Example 1 with the exception that in production of the monomer composition A, the amounts of styrene and n-butyl acrylate were changed as indicated in Table 1. Moreover, measurements and evaluations were conducted in the same way as in Example 1. The results are shown in Table 1.

(Examples 6 and 7)

A polymer A, a polymer B, a particulate polymer, a composition for a functional layer, a functional layer-equipped separator, a positive electrode, a negative electrode, and a lithium ion secondary battery were produced in the same way as in Example 1 with the exception that in production of the monomer composition A, the amounts of styrene and n-butyl acrylate were changed as indicated in Table 1, and tert-dodecyl mercaptan as a molecular weight modifier was added in an amount indicated in Table 1. Moreover, measurements and evaluations were conducted in the same way as in Example 1. The results are shown in Table 1.

(Examples 8 to 11)

A polymer A, a polymer B, a particulate polymer, a composition for a functional layer, a functional layer-equipped separator, a positive electrode, a negative electrode, and a lithium ion secondary battery were produced in the same way as in Example 1 with the exception that in production of the particulate polymer, the amounts in terms of solid content of the polymer A and the polymer B that were used were changed to amounts indicated in Table 2. Moreover, measurements and evaluations were conducted in the same way as in Example 1. The results are shown in Table 2.

(Examples 12 to 19)

A polymer A, a polymer B, a particulate polymer, a composition for a functional layer, a functional layer-equipped separator, a positive electrode, a negative electrode, and a lithium ion secondary battery were produced in the same way as in Example 1 with the exception that in production of the particulate polymer, the reaction temperature of the polymer A and the polymer B was changed as indicated in Table 3. Moreover, measurements and evaluations were conducted in the same way as in Example 1. The results are shown in Table 3.

(Examples 20 to 23)

A polymer A, a polymer B, a particulate polymer, a composition for a functional layer, a functional layer-equipped separator, a positive electrode, a negative electrode, and a lithium ion secondary battery were produced in the same way as in Example 1 with the exception that in production of the monomer composition A, the amounts of styrene, n-butyl acrylate, and ethylene glycol dimethacrylate were changed as indicated in Table 4. Moreover, measurements and evaluations were conducted in the same way as in Example 1. The results are shown in Table 4.

(Examples 24 to 27)

A polymer A, a polymer B, a particulate polymer, a composition for a functional layer, a functional layer-equipped separator, a positive electrode, a negative electrode, and a lithium ion secondary battery were produced in the same way as in Example 1 with the exception that in production of the monomer composition B, the amounts of styrene, n-butyl acrylate, and ethylene glycol dimethacrylate were changed as indicated in Table 5. Moreover, measurements and evaluations were conducted in the same way as in Example 1. The results are shown in Table 5.

(Example 28)

In production of the monomer composition B, coconut amine acetate was used as a dispersion stabilizer instead of sodium dodecylbenzenesulfonate. Moreover, 3-(methacrylamido)propyltrimethylammonium methyl sulfate was used instead of acrylic acid. Furthermore, magnesium sulfate was not added in production of the particulate polymer. With the exception of the above, a polymer A, a polymer B, a particulate polymer, a composition for a functional layer, a functional layer-equipped separator, a positive electrode, a negative electrode, and a lithium ion secondary battery were produced in the same way as in Example 1. Moreover, measurements and evaluations were conducted in the same way as in Example 1. The results are shown in Table 5.

(Example 29)

In the step of <Production of particulate polymer> in Example 1, magnesium sulfate was not added and the heating temperature was changed from 60°C to 30°C. With the exception of the above, a polymer A, a polymer B, a particulate polymer, a composition for a functional layer, a functional layer-equipped separator, a positive electrode, a negative electrode, and a lithium ion secondary battery were produced in the same way as in Example 1. Moreover, measurements and evaluations were conducted in the same way as in Example 1. The results are shown in Table 5.

(Example 30)

In the step of <Production of particulate polymer> in Example 29, the heating temperature was changed from 30°C to 25°C. With the exception of the above, a polymer A, a polymer B, a particulate polymer, a composition for a functional layer, a functional layer-equipped separator, a positive electrode, a negative electrode, and a lithium ion secondary battery were produced in the same way as in Example 1. Moreover, measurements and evaluations were conducted in the same way as in Example 1. The results are shown in Table 5.

(Example 31)

Suspension polymerization was performed through the following steps.

[Production of monomer composition]

A core portion monomer composition was produced by mixing 40 parts of styrene as an aromatic vinyl monomer, 55.5 parts of butyl acrylate as an unsaturated carboxylic acid ester monomer having a carbon number of 4, and 0.5 parts of ethylene glycol dimethacrylate and 4 parts of glycidyl methacrylate as cross-linkable monomers.

In addition, the polymer B of Example 1 that had been polymerized in advance was added in an amount of 30 parts by mass in terms of solid content relative to 100 parts by mass of the above-described monomers.

[Production of colloidal dispersion liquid]

A colloidal dispersion liquid containing magnesium hydroxide as a metal hydroxide was produced by gradually adding an aqueous solution of 7.0 parts of sodium hydroxide dissolved in 50 parts of deionized water to an aqueous solution of 10.0 parts of magnesium chloride dissolved in 200 parts of deionized water under stirring.

[Synthesis of particulate polymer]

A particulate polymer including a core portion and a shell portion was produced by suspension polymerization. Specifically, the above-described monomer composition was added to the above-described colloidal dispersion liquid containing magnesium hydroxide, was further stirred therewith, and then 2.0 parts of t-butyl peroxy-2-ethylhexanoate (produced by NOF Corporation; product name: PERBUTYL O) as a polymerization initiator was added to yield a mixture. The obtained mixture was subjected to 1 minute of high-shear stirring at a rotation speed of 11,000 rpm using an inline emulsifying/dispersing device (produced by Pacific Machinery & Engineering Co., Ltd.; product name: CAVITRON) so as to form droplets of the monomer composition in the colloidal dispersion liquid containing magnesium hydroxide. The magnesium hydroxide-containing colloidal dispersion liquid in which droplets of the monomer composition had been formed was loaded into a reactor, was heated to 90°C, and a polymerization reaction was performed for 5 hours to yield a water dispersion containing a particulate polymer.

[Removal of colloid]

The obtained water dispersion containing the particulate polymer was subjected to the following operations in order to obtain the particulate polymer in a dry state. First, the water dispersion containing the particulate polymer was stirred while adding sulfuric acid dropwise at room temperature (25°C) so as to perform acid washing until the pH was 5.5 or lower. Next, separation was performed by filtration, 500 parts of deionized water was added to the resultant solid content to reform a slurry, and water washing treatment (washing, filtration, and dehydration) was repeated a number of times. Thereafter, separation was performed by filtration, and then the resultant solid content was loaded into a vessel of a dryer and was dried at 25°C for 1 minute to yield a particulate polymer having a core-shell structure in a dry state. With the exception of the above, a composition for a functional layer, a functional layer-equipped separator, a positive electrode, a negative electrode, and a lithium ion secondary battery were produced in the same way as in Example 1. Moreover, measurements and evaluations were conducted in the same way as in Example 1. Note that the volume-average particle diameter was measured according to the method described in the <Volume-average particle diameter D50 of polymer A> section. The results are shown in Table 5.

(Comparative Example 1)

In production of the monomer composition A, 55.5 parts of ethylhexyl acrylate, which is an unsaturated carboxylic acid ester monomer having a carbon number of 8, was used instead of n-butyl acrylate. Moreover, in production of the monomer composition B, 42 parts of styrene, 25 parts of ethylene glycol dimethacrylate, 30 parts of butyl acrylate, and 3 parts of acrylic acid were used instead of the monomers used in Example 1.
With the exception of the above, a polymer A, a polymer B, a particulate polymer, a composition for a functional layer, a functional layer-equipped separator, a positive electrode, a negative electrode, and a lithium ion secondary battery were produced in the same way as in Example 1. Moreover, measurements and evaluations were conducted in the same way as in Example 1. The results are shown in Table 6.

(Comparative Examples 2 and 3)

In production of the monomer composition A, monomers indicated in Table 6 and tert-dodecyl mercaptan were used instead of the monomers used in Example 1. Moreover, a monomer composition B that was the same as that in Comparative Example 1 was used.
With the exception of the above, a polymer A, a polymer B, a particulate polymer, a composition for a functional layer, a functional layer-equipped separator, a positive electrode, a negative electrode, and a lithium ion secondary battery were produced in the same way as in Example 1. Moreover, measurements and evaluations were conducted in the same way as in Example 1. The results are shown in Table 6. Note that the polymer A in Comparative Example 2 completely dissolved in the electrolyte solution that was used to measure the degree of swelling. Therefore, a value for the degree of swelling could not be determined by the same method as in the other examples and comparative examples, and the value of the degree of swelling is denoted as "0" in Table 6.

(Comparative Examples 4 and 5)

In production of the monomer composition A, the amounts of styrene, n-butyl acrylate, and ethylene glycol dimethacrylate were changed as indicated in Table 6.

Moreover, in production of the particulate polymer, the polymer B was not used in Comparative Example 4, and the amounts in terms of solid content of the polymer A and the polymer B that were used were respectively changed to 8 parts and 92 parts in Comparative Example 5.

With the exception of the above, a polymer A, a polymer B, a particulate polymer, a composition for a functional layer, a functional layer-equipped separator, a positive electrode, a negative electrode, and a lithium ion secondary battery were produced in the same way as in Example 1. Moreover, measurements and evaluations were conducted in the same way as in Example 1. The results are shown in Table 6.

(Comparative Example 6)

In production of the particulate polymer, a polymer A produced by the following method and the polymer B produced in Comparative Example 1 were used, and the reaction temperature of the polymer A and the polymer B was changed to 40°C.

With the exception of the above, a polymer B, a particulate polymer, a composition for a functional layer, a functional layer-equipped separator, a positive electrode, a negative electrode, and a lithium ion secondary battery were produced in the same way as in Example 1. Moreover, measurements and evaluations were conducted in the same way as in Example 1. The results are shown in Table 6.

<Production of polymer A>

A reactor including a stirrer was supplied with 350 parts of deionized water. The gas phase was purged with nitrogen gas, and the temperature was raised to 60°C.

The reactor was further charged with 1.0 parts of sodium dodecylbenzenesulfonate as a dispersion stabilizer, 41 parts of styrene, 35 parts of n-butyl acrylate, 20 parts of ethylene glycol dimethacrylate, 1 part of glycidyl methacrylate, 1 part of acrylic acid, 1 part of acrylamide, and 1 part of hydroxymethyl acrylate to produce a monomer composition A.

Thereafter, 0.3 parts of ammonium persulfate as a polymerization initiator was added to the monomer composition A to initiate a reaction.

At 80 minutes after the start of the reaction, the temperature was raised to 80°C, a further 2 hours of stirring was performed, and then the reaction was ended to yield a particulate polymer. The volume-average particle diameter D50 of the obtained particulate polymer was measured. The result is shown in Table 6.

(Comparative Example 7)

In production of the particulate polymer, the amounts in terms of solid content of the polymer A and the polymer B that were used were respectively changed to 40 parts and 60 parts, and the reaction temperature of the polymer A and the polymer B was changed to 85°C. With the exception of the above, a polymer A, a polymer B, a particulate polymer, a composition for a functional layer, a functional layer-equipped separator, a positive electrode, a negative electrode, and a lithium ion secondary battery were produced in the same way as in Comparative Example 6. Moreover, measurements and evaluations were conducted in the same way as in Example 1. The results are shown in Table 6.

[Table 1]

| | | | | Example 1 | Example 2 | Example 3 | Example 4 | Example 5 | Example 6 | Example 7 |
|---|---|---|---|---|---|---|---|---|---|---|
| Particulate polymer | Core portion | Aromatic vinyl monomer | ST [parts by mass] | 40 | 40 | 40 | 3.7 | 16.7 | 88.3 | 76.2 |
| | | Unsaturated carboxylic acid ester monomer | BA (carbon no.: 4) [parts by mass] | 55.5 | - | - | 91.8 | 78.8 | 5.7 | 18.5 |
| | | | HA (carbon no.: 6) [parts by mass] | - | - | 55.5 | - | - | - | - |
| | | | EA (carbon no.: 2) [parts by mass] | - | 55.5 | - | - | - | - | - |
| | | | 2EHA (carbon no.: 8) [parts by mass] | - | - | - | - | - | - | - |
| | | Cross-linkable monomer | EDMA [parts by mass] | 0.5 | 0.5 | 0.5 | 0.5 | 0.5 | 0.5 | 0.5 |
| | | | GMA [parts by mass] | 1 | 1 | 1 | 1 | 1 | 1 | 1 |
| | | Acidic group-containing monomer | AA [parts by mass] | 1 | 1 | 1 | 1 | 1 | 1 | 1 |
| | | Amide group-containing monomer | AAm [parts by mass] | 1 | 1 | 1 | 1 | 1 | 1 | 1 |
| | | | HMAA [parts by mass] | 1 | 1 | 1 | 1 | 1 | 1 | 1 |
| | | tert-Dodecyl mercaptan | [parts by mass] | - | - | - | - | - | 1.5 | 0.8 |
| | | Total monomer | [parts by mass] | 100 | 100 | 100 | 100 | 100 | 100 | 100 |
| | | Degree of swelling in electrolyte solution of polymer A | [×] | 2.5 | 2.8 | 2.2 | 4.9 | 4.5 | 0.1 | 0.5 |
| | Shell portion | Aromatic vinyl monomer | ST [parts by mass] | 63.2 | 63.2 | 63.2 | 63.2 | 63.2 | 63.2 | 63.2 |
| | | Unsaturated carboxylic acid ester monomer | BA [parts by mass] | 33 | 33 | 33 | 33 | 33 | 33 | 33 |
| | | Cross-linkable monomer | EDMA [parts by mass] | 0.8 | 0.8 | 0.8 | 0.8 | 0.8 | 0.8 | 0.8 |
| | | Acidic group-containing monomer | AA [parts by mass] | 3 | 3 | 3 | 3 | 3 | 3 | 3 |
| | | Cationic group-containing monomer | 3(MAA)PTMAMS [parts by mass] | - | - | - | - | - | - | - |
| | | Total monomer | [parts by mass] | 100 | 100 | 100 | 100 | 100 | 100 | 100 |

EP 4 657 641 A1

(continued)

| | | | Example 1 | Example 2 | Example 3 | Example 4 | Example 5 | Example 6 | Example 7 |
|---|---|---|---|---|---|---|---|---|---|
| | Coverage of outer surface of core portion by shell portion | [%] | 50 | 50 | 50 | 50 | 50 | 50 | 50 |
| | Amount of solid content of polymer A used in production of particulate polymer | [parts by mass] | 40 | 40 | 40 | 40 | 40 | 40 | 40 |
| | Amount of solid content of polymer B used in production of particulate polymer | [parts by mass] | 60 | 60 | 60 | 60 | 60 | 60 | 60 |
| | Reaction temperature of polymer A and polymer B | [°C] | 60 | 60 | 60 | 60 | 60 | 60 | 60 |
| | Volume-average particle diameter D50 of polymer A | [$\mu$m] | 5.0 | 5.0 | 5.0 | 5.0 | 5.0 | 5.0 | 5.0 |
| | Volume-average particle diameter D50 of particulate polymer | [$\mu$m] | 5.5 | 5.5 | 5.5 | 5.5 | 5.5 | 5.5 | 5.5 |
| Evaluation | Cycle characteristics of secondary battery | | A | A | A | C | B | A | A |
| | Adhesiveness to separator (blocking resistance) | | A | B | B | B | B | B | B |
| | Adhesiveness after immersion in electrolyte solution | | A | A | A | A | A | C | B |

[Table 2]

| | | | | Example 8 | Example 9 | Example 10 | Example 11 |
|---|---|---|---|---|---|---|---|
| Particulate polymer | Core portion | Aromatic vinyl monomer | ST [parts by mass] | 40 | 40 | 40 | 40 |
| | | Unsaturated carboxylic acid ester monomer | BA (carbon no.: 4) [parts by mass] | 55.5 | 55.5 | 55.5 | 55.5 |
| | | | HA (carbon no.: 6) [parts by mass] | - | - | - | - |
| | | | EA (carbon no.: 2) [parts by mass] | - | - | - | - |
| | | | 2EHA (carbon no.: 8) [parts by mass] | - | - | - | - |
| | | Cross-linkable monomer | EDMA [parts by mass] | 0.5 | 0.5 | 0.5 | 0.5 |
| | | | GMA [parts by mass] | 1 | 1 | 1 | 1 |
| | | Acidic group-containing monomer | AA [parts by mass] | 1 | 1 | 1 | 1 |
| | | Amide group-containing monomer | AAm [parts by mass] | 1 | 1 | 1 | 1 |
| | | | HMAA [parts by mass] | 1 | 1 | 1 | 1 |
| | | tert-Dodecyl mercaptan | [parts by mass] | - | - | - | - |
| | | Total monomer | [parts by mass] | 100 | 100 | 100 | 100 |
| | | Degree of swelling in electrolyte solution of polymer A | [×] | 2.5 | 2.5 | 2.5 | 2.5 |
| | Shell portion | Aromatic vinyl monomer | ST [parts by mass] | 63.2 | 63.2 | 63.2 | 63.2 |
| | | Unsaturated carboxylic acid ester monomer | BA [parts by mass] | 33 | 33 | 33 | 33 |
| | | Cross-linkable monomer | EDMA [parts by mass] | 0.8 | 0.8 | 0.8 | 0.8 |
| | | Acidic group-en-ntaining mono-mer | AA [parts by mass] | 3 | 3 | 3 | 3 |
| | | Cationic group-containing monomer | 3(MAA)PTMAMS [parts by mass] | - | - | - | - |
| | | Total monomer | [parts by mass] | 100 | 100 | 100 | 100 |
| | Coverage of outer surface of core portion by shell portion | | [%] | 60 | 90 | 1 | 10 |

(continued)

|  |  |  | Example 8 | Example 9 | Example 10 | Example 11 |
|---|---|---|---|---|---|---|
|  | Amount of solid content of polymer A used in production of particulate polymer | [parts by mass] | 30 | 20 | 99 | 95 |
|  | Amount of solid content of polymer B used in production of particulate polymer | [parts by mass] | 70 | 80 | 1 | 5 |
|  | Reaction temperature of polymer A and polymer B | [°C] | 60 | 60 | 60 | 60 |
|  | Volume-average particle diameter of polymer A | [μm] | 5.0 | 5.0 | 5.0 | 5.0 |
|  | Volume-average particle diameter of particulate polymer | [μm] | 5.5 | 5.5 | 5.5 | 5.5 |
| Evaluation |  | Cycle characteristics of secondary battery | A | A | A | A |
|  |  | Adhesiveness to separator (blocking resistance) | A | A | C | B |
|  |  | Adhesiveness after immersion in electrolyte solution | A | B | A | A |

[Table 3]

| | | | | Example 12 | Example 13 | Example 14 | Example 15 | Example 16 | Example 17 | Example 18 | Example 19 |
|---|---|---|---|---|---|---|---|---|---|---|---|
| Particulate polymer | Core portion | Aromatic vinyl monomer | ST [parts by mass] | 40 | 40 | 40 | 40 | 40 | 40 | 40 | 40 |
| | | Unsaturated carboxylic acid ester monomer | BA (carbon no.: 4) [parts by mass] | 55.5 | 55.5 | 55.5 | 55.5 | 55.5 | 55.5 | 55.5 | 55.5 |
| | | | HA (carbon no.: 6) [parts by mass] | - | - | - | - | - | - | - | - |
| | | | EA (carbon no.: 2) [parts by mass] | - | - | - | - | - | - | - | - |
| | | | 2EHA (carbon no.: 8) [parts by mass] | - | - | - | - | - | - | - | - |
| | | Cross-linkable monomer | EDMA [parts by mass] | 0.5 | 0.5 | 0.5 | 0.5 | 0.5 | 0.5 | 0.5 | 0.5 |
| | | | GMA [parts by mass] | 1 | 1 | 1 | 1 | 1 | 1 | 1 | 1 |
| | | Acidic group-containing monomer | AA [parts by mass] | 1 | 1 | 1 | 1 | 1 | 1 | 1 | 1 |
| | | Amide group-containing monomer | AAm [parts by mass] | 1 | 1 | 1 | 1 | 1 | 1 | 1 | 1 |
| | | | HMAA [parts by mass] | 1 | 1 | 1 | 1 | 1 | 1 | 1 | 1 |
| | | tert-Dodecyl mercaptan | [parts by mass] | - | - | - | - | - | - | - | - |
| | | Total monomer | [parts by mass] | 100 | 100 | 100 | 100 | 100 | 100 | 100 | 100 |
| | | Degree of swelling in electrolyte solution of polymer A | [×] | 2.5 | 2.5 | 2.5 | 2.5 | 2.5 | 2.5 | 2.5 | 2.5 |
| | Shell portion | Aromatic vinyl monomer | ST [parts by mass] | 63.2 | 63.2 | 63.2 | 63.2 | 63.2 | 63.2 | 63.2 | 63.2 |
| | | Unsaturated carboxylic acid ester monomer | BA [parts by mass] | 33 | 33 | 33 | 33 | 33 | 33 | 33 | 33 |
| | | Cross-finkable monomer | EDMA [parts by mass] | 0.8 | 0.8 | 0.8 | 0.8 | 0.8 | 0.8 | 0.8 | 0.8 |
| | | Acidic group-containing monomer | AA [parts by mass] | 3 | 3 | 3 | 3 | 3 | 3 | 3 | 3 |
| | | Cationic group-containing monomer | 3(MAA)PTMAMS [parts by mass] | - | - | - | - | - | - | - | - |
| | | Total monomer | [parts by mass] | 100 | 100 | 100 | 100 | 100 | 100 | 100 | 100 |

(continued)

| | | Example 12 | Example 13 | Example 14 | Example 15 | Example 16 | Example 17 | Example 18 | Example 19 |
|---|---|---|---|---|---|---|---|---|---|
| Coverage of outer surface of core portion by shell portion | [%] | 50 | 50 | 50 | 50 | 50 | 50 | 50 | 50 |
| Amount of solid content of polymer A used in production of particulate polymer | [parts by mass] | 40 | 40 | 40 | 40 | 40 | 40 | 40 | 40 |
| Amount of solid content of polymer B used in production of particulate polymer | [parts by mass] | 60 | 60 | 60 | 60 | 60 | 60 | 60 | 60 |
| Reaction temperature of polymer A and polymer B | [°C] | 25 | 33 | 42 | 45 | 50 | 65 | 70 | 75 |
| Volume-average particle diameter of polymer A | [μm] | 0.1 | 0.5 | 1.0 | 1.5 | 2.8 | 7 | 9.5 | 9.9 |
| Volume-average particle diameter of particulate polymer | [μm] | 0.3 | 0.7 | 1.1 | 2.1 | 3.5 | 7.8 | 11 | 12 |
| Evaluation | Cycle characteristics of secondary battery | B | A | A | A | A | A | B | C |
| | Adhesiveness to separator (blocking resistance) | A | A | A | A | A | A | A | A |
| | Adhesiveness after immersion in electrolyte solution | C | B | C | B | A | A | A | A |

[Table 4]

| | | | | Example 20 | Example 21 | Example 22 | Example 23 |
|---|---|---|---|---|---|---|---|
| Particulate polymer | Core portion | Aromatic vinyl monomer | ST [parts by mass] | 50.9 | 50.8 | 20 | 18 |
| | | Unsaturated carboxylic acid ester monomer | BA (carbon no.: 4) [parts by mass] | 45 | 45 | 11 | 8 |
| | | | HA (carbon no.: 6) [parts by mass] | - | - | - | - |
| | | | EA (carbon no.: 2) [parts by mass] | - | - | - | - |
| | | | 2EHA (carbon no.: 8) [parts by mass] | - | - | - | - |
| | | Cross-linkable monomer | EDMA [parts by mass] | 0.1 | 0.2 | 65 | 70 |
| | | | GMA [parts by mass] | 1 | 1 | 1 | 1 |
| | | Acidic group-containing monomer | AA [parts by mass] | 1 | 1 | 1 | 1 |
| | | Amide group-containing monomer | AAm [parts by mass] | 1 | 1 | 1 | 1 |
| | | | HMAA [parts by mass] | 1 | 1 | 1 | 1 |
| | | tert-Dodecyl mercaptan | [parts by mass] | - | - | - | - |
| | | Total monomer | [parts by mass] | 100 | 100 | 100 | 100 |
| | | Degree of swelling in electrolyte solution of polymer A | [×] | 3.8 | 3.6 | 1.8 | 1.5 |
| | Shell portion | Aromatic vinyl monomer | ST [parts by mass] | 63.2 | 63.2 | 63.2 | 63.2 |
| | | Unsaturated carboxylic acid ester monomer | BA [parts by mass] | 33 | 33 | 33 | 33 |
| | | Cross-linkable monomer | EDMA [parts by mass] | 0.8 | 0.8 | 0.8 | 0.8 |
| | | Acidic group-containing monomer | AA [parts by mass] | 3 | 3 | 3 | 3 |
| | | Cationic group-containing monomer | 3(MAA)PTMAMS [parts by mass] | - | - | - | - |
| | | Total monomer | [parts by mass] | 100 | 100 | 100 | 100 |
| | Coverage of outer surface of core portion by shell portion | | [%] | 50 | 50 | 50 | 50 |
| | Amount of solid content of polymer A used in production of particulate polymer | | [parts by mass] | 40 | 40 | 40 | 40 |
| | Amount of solid content of polymer B used in production of particulate polymer | | [parts by mass] | 60 | 60 | 60 | 60 |
| | Reaction temperature of polymer A and polymer B | | [°C] | 60 | 60 | 60 | 60 |
| | Volume-average particle diameter of polymer A | | [μm] | 5.0 | 5.0 | 5.0 | 5.0 |
| | Volume-average particle diameter of particulate polymer | | [μm] | 5.5 | 5.5 | 5.5 | 5.5 |

(continued)

| Example 20 Example 21 Example 22 Example 23 | | | | | | |
|---|---|---|---|---|---|---|
| Evaluation | Cycle characteristics of secondary battery | A | A | A | A |
| | Adhesiveness to separator (blocking resistance) | C | B | A | A |
| | Adhesiveness after immersion in electrolyte solution | A | A | A | B |

[Table 5]

| | | | | Example 24 | Example 25 | Example 26 | Example 27 | Example 28 | Example 29 | Example 30 | Example 31 |
|---|---|---|---|---|---|---|---|---|---|---|---|
| Particulate polymer | Core portion | Aromatic vinyl monomer | ST [parts by mass] | 40 | 40 | 40 | 40 | 40 | 40 | 40 | 40 |
| | | Unsaturated carboxylic acid ester monomer | BA (carbon no.: 4) [parts by mass] | 55.5 | 55.5 | 55.5 | 55.5 | 55.5 | 55.5 | 55.5 | 55.5 |
| | | | HA (carbon no.: 6) [parts by mass] | - | - | - | - | - | - | - | - |
| | | | EA (carbon no.: 2) [parts by mass] | - | - | - | - | - | - | - | - |
| | | | 2EHA (carbon no.: 8) [parts by mass] | - | - | - | - | - | - | - | - |
| | | Cross-linkable monomer | EDMA [parts by mass] | 0.5 | 0.5 | 0.5 | 0.5 | 0.5 | 0.5 | 0.5 | 0.5 |
| | | | GMA [parts by mass] | 1 | 1 | 1 | 1 | 1 | 1 | 1 | 4 |
| | | Acidic group-containing monomer | AA [parts by mass] | 1 | 1 | 1 | 1 | 1 | 1 | 1 | - |
| | | Amide group-containing monomer | AAm [parts by mass] | 1 | 1 | 1 | 1 | 1 | 1 | 1 | - |
| | | | HMAA [parts by mass] | 1 | 1 | 1 | 1 | 1 | 1 | 1 | - |
| | | tert-Dodecyl mercaptan | [parts by mass | - | - | - | - | - | - | - | - |
| | | Total monomer | [parts by mass] | 100 | 100 | 100 | 100 | 100 | 100 | 100 | 100 |
| | | Degree of swelling in electrolyte solution of polymer A | [×] | 2.5 | 2.5 | 2.5 | 2.5 | 2.5 | 2.5 | 2.5 | 2.5 |
| | Shell portion | Aromatic vinyl monomer | ST [parts by mass] | 52 | 52 | 12 | 5 | 63.2 | 63.2 | 63.2 | 63.2 |
| | | Unsaturated carboxylic acid ester monomer | BA [parts by mass] | 44.9 | 44.8 | 20 | 22 | 33 | 33 | 33 | 33 |
| | | Cross-linkable monomer | EDMA [parts by mass] | 0.1 | 0.2 | 65 | 70 | 0.8 | 0.8 | 0.8 | 0.8 |
| | | Acidic group-containing monomer | AA [parts by mass] | 3 | 3 | 3 | 3 | - | 3 | 3 | 3 |
| | | Cationic group-containing monomer | 3(MAA)PTMAMS [parts by mass] | - | - | - | - | 3 | - | - | - |
| | | Total monomer | [parts by mass] | 100 | 100 | 100 | 100 | 100 | 100 | 100 | 100 |

EP 4 657 641 A1

33

| | | | Example 24 | Example 25 | Example 26 | Example 27 | Example 28 | Example 29 | Example 30 | Example 31 |
|---|---|---|---|---|---|---|---|---|---|---|
| | Coverage of outer surface of core portion by shell portion | [%] | 50 | 50 | 50 | 50 | 50 | 50 | 50 | 50 |
| | Amount of solid content of polymer A used in production of particulate polymer | [parts by mass] | 40 | 40 | 40 | 40 | 40 | 40 | 40 | 100 |
| | Amount of solid content of polymer B used in production of particulate polymer | [parts by mass] | 60 | 60 | 60 | 60 | 60 | 60 | 60 | 30 |
| | Reaction temperature of polymer A and polymer B | [°C] | 60 | 60 | 60 | 60 | 60 | 30 | 25 | - |
| | Volume-average particle diameter of polymer A | [μm] | 5.0 | 5.0 | 5.0 | 5.0 | 5.0 | 3.9 | 3.1 | 3.1 |
| | Volume-average particle diameter of particulate polymer | [μm] | 5.5 | 5.5 | 5.5 | 5.5 | 5.5 | 4.2 | 3.5 | 3.5 |
| Evaluation | Cycle characteristics of secondary battery | | A | A | A | A | A | A | B | A |
| | Adhesiveness to separator (blocking resistance) | | C | B | A | A | A | A | A | A |
| | Adhesiveness after immersion in electrolyte solution | | A | A | A | B | A | B | B | A |

EP 4 657 641 A1

34

[Table 6]

| | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Particulate polymer | Core portion | Aromatic vinyl monomer | ST [parts by mass] | 40 | 29 | 29 | 41 | 41 | 41 | 41 |
| | | Unsaturated carboxylic acid ester monomer | BA (carbon no.: 4) [parts by mass] | - | 60 | 64.9 | 35 | 35 | 35 | 35 |
| | | | HA (carbon no.: 6) [parts by mass] | - | - | - | - | - | - | - |
| | | | EA (carbon no.: 2) [parts by mass] | - | - | - | - | - | - | - |
| | | | 2EHA (carbon no.: 8) [parts by mass] | 55.5 | - | - | - | - | - | - |
| | | Cross-linkable monomer | EDMA [parts by mass] | 0.5 | - | 0.01 | 20 | 20 | 20 | 20 |
| | | | GMA [parts by mass] | 1 | - | - | 1 | 1 | 1 | 1 |
| | | Acidic group-containing monomer | AA [parts by mass] | 1 | 1 | 1 | 1 | 1 | 1 | 1 |
| | | Amide group-contaiting monomer | AAm [parts by mass] | 1 | - | - | 1 | 1 | 1 | 1 |
| | | | HMAA [parts by mass] | 1 | - | - | 1 | 1 | 1 | 1 |
| | | tert-Dodecyl mercaptan | [parts by mass] | - | 10 | 5 | - | - | - | - |
| | | Total monomer | [parts by mass] | 100 | 100 | 99.91 | 100 | 100 | 100 | 100 |
| | | Degree of swelling in electrolyte solution of polymer A | [×] | 2.5 | 0 | 6 | 2.5 | 2.5 | 2.5 | 2.5 |

(continued)

| | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Shell portion | | Aromatic vinyl monomer | ST [parts by mass] | 42 | 42 | 42 | - | 42 | 42 | 42 |
| | | Unsaturated carboxylic acid ester monomer | BA [parts by mass] | 30 | 30 | 30 | - | 30 | 30 | 30 |
| | | Cross-linkable monomer | EDMA [parts by mass] | 25 | 25 | 25 | - | 25 | 25 | 25 |
| | | Acidic group-containing monomer | AA [parts by mass] | 3 | 3 | 3 | - | 3 | 3 | 3 |
| | | Cationic group-containing monomer | 3(MAA)PTMAMS [parts by mass] | - | - | - | - | - | - | - |
| | | Total monomer | [parts by mass] | 100 | 100 | 100 | - | 100 | 100 | 100 |
| Coverage of outer surface of core portion by shell portion | | | [%] | 50 | 50 | 50 | - | 95 | 50 | 50 |
| Amount of solid content of polymer A used in production of particulate polymer | | | [parts by mass] | 40 | 40 | 40 | 100 | 8 | 40 | 40 |
| Amount of solid content of polymer B used in production of particulate polymer | | | [parts by mass] | 60 | 60 | 60 | - | 92 | 60 | 60 |
| Reaction temperature of polymer A and polymer B | | | [°C] | 60 | 60 | 60 | 60 | 60 | 40 | 85 |
| Volume-average particle diameter of polymer A | | | [μm] | 5.0 | 5.0 | 5.0 | 5.0 | 5.0 | 0.03 | 15.0 |
| Volume-average particle diameter of particulate polymer | | | [μm] | 5.5 | 5.5 | 5.5 | 5.5 | 5.5 | 0.08 | 16 |

EP 4 657 641 A1

36

(continued)

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Evaluation | Cycle characteristics of secondary battery | D | C | D | B | B | B | D |
| | Adhesiveness to separator (blocking resistance) | B | B | B | D | C | B | C |
| | Adhesiveness after immersion in electrolyte solution | B | D | C | C | D | D | B |

In Tables 1 to 6:

"ST" indicates styrene;
"BA" indicates n-butyl acrylate;
"HA" indicates hexyl acrylate;
"EA" indicates ethyl acrylate;
"AA" indicates acrylic acid;
"AAm" indicates acrylamide;
"HMAA" indicates hydroxymethyl acrylamide;
"2EHA" indicates 2-ethylhexyl acrylate;
"EDMA" indicates ethylene glycol dimethacrylate;
"GMA" indicates glycidyl methacrylate; and
"3(MAA)PTMAMS" indicates 3-(methacrylamido)propyltrimethylammonium methyl sulfate.

It can be seen from Tables 1 to 5 that in Examples 1 to 31 in which a composition that contained a particulate polymer having a specific core-shell structure and properties was used, a functional layer having high adhesive strength after immersion in electrolyte solution can be obtained, and a lithium ion secondary battery including that functional layer can have excellent cycle characteristics.

INDUSTRIAL APPLICABILITY

According to the present disclosure, it is possible to provide a composition for an electrochemical device functional layer with which it is possible to form a functional layer for an electrochemical device that enables a good balance of high adhesive strength after immersion in electrolyte solution and low resistance of an electrochemical device.

Moreover, according to the present disclosure, it is possible to provide a functional layer for an electrochemical device that enables a good balance of high adhesive strength after immersion in electrolyte solution and low resistance of an electrochemical device.

Furthermore, according to the present disclosure, it is possible to provide a laminate for an electrochemical device that can reduce resistance of an electrochemical device.

Also, according to the present disclosure, it is possible to provide an electrochemical device that has low resistance and excellent electrochemical characteristics such as cycle characteristics.

**Claims**

1. A composition for an electrochemical device functional layer comprising a particulate polymer, wherein

   the particulate polymer has a core-shell structure including a core portion and a shell portion partially covering an outer surface of the core portion,
   coverage of the outer surface of the core portion by the shell portion is not less than 1% and not more than 90%, and
   a polymer A of the core portion has a degree of swelling in electrolyte solution of not less than $\times 0.1$ and less than $\times 5$, includes an unsaturated carboxylic acid ester monomer unit having a carbon number of 6 or less, and has a volume-average particle diameter D50 of not less than 0.1 $\mu$m and not more than 10 $\mu$m.

2. The composition for an electrochemical device functional layer according to claim 1, wherein the particulate polymer has a volume-average particle diameter D50 of not less than 1.0 $\mu$m and not more than 12 $\mu$m.

3. The composition for an electrochemical device functional layer according to claim 1, wherein the polymer A of the core portion includes a cross-linkable monomer unit in a proportion of not less than 0.1 mass% and not more than 75 mass%.

4. The composition for an electrochemical device functional layer according to claim 1, wherein a polymer B of the shell portion includes a cross-linkable monomer unit in a proportion of not less than 0.1 mass% and not more than 75 mass%.

5. A functional layer for an electrochemical device formed using the composition for an electrochemical device functional layer according to any one of claims 1 to 4.

6. A laminate for an electrochemical device comprising a substrate and a functional layer on the substrate, wherein the functional layer is the functional layer for an electrochemical device according to claim 5.

7. An electrochemical device comprising the laminate for an electrochemical device according to claim 6.

## INTERNATIONAL SEARCH REPORT

International application No.

**PCT/JP2024/001908**

### A. CLASSIFICATION OF SUBJECT MATTER

***H01M 50/443***(2021.01)i; ***H01G 11/52***(2013.01)i; ***H01M 4/02***(2006.01)i; ***H01M 4/13***(2010.01)i; ***H01M 50/42***(2021.01)i; ***H01M 50/449***(2021.01)i

FI: H01M50/443 E; H01G11/52; H01M4/02 Z; H01M4/13; H01M50/42; H01M50/443 B; H01M50/449

According to International Patent Classification (IPC) or to both national classification and IPC

### B. FIELDS SEARCHED

Minimum documentation searched (classification system followed by classification symbols)

H01M50/400-497; H01M4/00-62; H01G11/52

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2015/064411 A1 (ZEON CORPORATION) 07 May 2015 (2015-05-07) example 19, claim 8, paragraphs [0069], [0070], [0233] | 1-7 |
| A | WO 2020/090395 A1 (ZEON CORPORATION) 07 May 2020 (2020-05-07) entire text, all drawings | 1-7 |
| A | WO 2016/152026 A1 (ZEON CORPORATION) 29 September 2016 (2016-09-29) entire text, all drawings | 1-7 |
| A | WO 2020/045246 A1 (ZEON CORPORATION) 05 March 2020 (2020-03-05) entire text, all drawings | 1-7 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 April 2024** | **16 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/001908**

| Patent document cited in search report | | | Publication date (day/month/year) | Patent family member(s) | | | Publication date (day/month/year) |
|---|---|---|---|---|---|---|---|
| WO | 2015/064411 | A1 | 07 May 2015 | US | 2016/0268565 | A1 | |
| | | | | example 19, claim 8, paragraphs [0103]-[0104], [0353] | | | |
| | | | | CN | 105659426 | A | |
| | | | | KR | 10-2016-0078967 | A | |
| WO | 2020/090395 | A1 | 07 May 2020 | US | 2021/0351475 | A1 | |
| | | | | entire text, all drawings | | | |
| | | | | EP | 3876304 | A1 | |
| | | | | CN | 112868133 | A | |
| | | | | KR | 10-2021-0082452 | A | |
| WO | 2016/152026 | A1 | 29 September 2016 | US | 2018/0053963 | A1 | |
| | | | | entire text, all drawings | | | |
| | | | | EP | 3273506 | A1 | |
| | | | | CN | 107431169 | A | |
| | | | | KR | 10-2017-0129125 | A | |
| WO | 2020/045246 | A1 | 05 March 2020 | US | 2021/0296732 | A1 | |
| | | | | entire text, all drawings | | | |
| | | | | EP | 3846246 | A1 | |
| | | | | CN | 112437996 | A | |
| | | | | KR | 10-2021-0049098 | A | |

Form PCT/ISA/210 (patent family annex) (July 2022)

**REFERENCES CITED IN THE DESCRIPTION**

**Patent documents cited in the description**

- JP 6504168 B

- JP 2013145763 A